# EUROPÄISCHE PATENTANMELDUNG

(11) **EP 2 292 899 A1**
(43) Veröffentlichungstag der Anmeldung: **09.03.2011**
(21) Anmeldenummer: 09011449.7
(22) Anmeldetag: 07.09.2009
(51) Int. Cl.: F01D 5/30, G01B 5/20, G01B 11/245, G01B 21/20, G05B 19/418, G01B 5/14, G01B 7/14, G01B 11/14

(54) **Verfahren und Apparatur zur Prüfung von Profilnuten**

(71) Anmelder: SIEMENS AKTIENGESELLSCHAFT, 80333 München (DE)
(72) Erfinder: Knoche, Wolfram, 46487 Wesel (DE); König, Niels, 52068 Aachen (DE)

(57) **Zusammenfassung**

Ein Verfahren zum Prüfen von Profilnuten mit wenigstens einem Paar von Anlageflächen unter Verwendung eines Prüfkörpers mit mehreren Messflächen und einer der Geometrie der zu prüfenden Nut angepassten Querschnittsform, wobei in den Messflächen Abstandssensoren in wenigstens zwei zur Querschnittsebene des Prüfkörpers parallelen Messebenen derart angeordnet sind, dass in einer ersten Messebene in jeder Messfläche wenigstens zwei Abstandssensoren vorgesehen sind und in einer zweiten Messebene in einer dem Nutgrund gegenüberliegenden Messfläche und in einer weiteren Messfläche jeweils wenigstens ein Sensor in Profillängsrichtung auf einer Linie mit jeweils einem der Sensoren in der ersten Messebene vorgesehen sind, weist die Schritte auf: Positionieren des Prüfkörpers in der Nut; Anlegen des Prüfkörpers an wenigstens einer der Anlagenflächen der Nut und Fixieren des Prüfkörpers in der Nut durch Aufrechterhalten einer vorbestimmten Anpresskraft; Aktivieren der Sensoren und Empfangen von Signalen von diesen; Berechnen eines Abstandswerts für jeden Sensor auf der Grundlage der Sensorsignale; Berechnen eines Abstandsabweichungswerts für jeden Abstandssensor gegenüber einem vorab gespeicherten Referenzquerschnitt der Nut; Berechnen von Lageabweichungen des Prüfkörpers gegenüber der Nut auf der Grundlage der Abstandsabweichungswerte für die Abstandssensoren in der ersten und zweiten Messebene unter der Annahme, dass sich die Nutgeometrie zwischen der ersten und der zweiten Nutebene im Wesentlichen nicht ändert; Berechnen von korrigierten Abstandsabweichungswerten für die Abstandssensoren der ersten Messebene durch Kompensieren der berechneten Lageabweichungen; und Berechnen einer Ist-Geometrie der Nut auf der Grundlage der kompensierten Abstandsabweichungswerte für die Abstandssensoren der ersten Messebene.

## Beschreibung

Die vorliegende Erfindung betrifft ein Verfahren und eine Vorrichtung zur Prüfung von Profilnuten, insbesondere von Tragschultern von Tannennuten.

Laufschaufeln von Turbinen insbesondere größerer Bauart, wie sie in Kraftwerken verwendet werden, sind üblicherweise mit ihrem Schaufelfuß einzeln in profilierten Nuten gelagert, die teilweise wendelförmig in die äußere Zylinderoberfläche der Laufräder eingearbeitet sind. Die sich zum Nutgrund hin verjüngenden Nutflanken weisen mehrere, üblicherweise drei, gegenüberliegende Paare von Längsrillen auf, wodurch sich eine typische Querschnittsform des Nutprofils ergibt, die auch als "Tannennut" bezeichnet wird. Die jeweiligen Oberseiten der Rillen bilden Tragschultern, gegen die sich die entsprechenden Gegenschultern der Schaufelfüße abstützen. Die Nutlängsachse weist darüber hinaus eine Krümmung derart auf, dass die Nut in ihrer Längserstreckung eine konkave und eine konvexe Flanke aufweist. Bei typischen Bauteildurchmessern im Bereich einiger Meter liegen die Toleranzen für die Abstandsabweichung der gegenüberliegenden Tragschultern zueinander bei 0 bis -0,02 mm, für die Parallelitätsabweichung der Tragschultern zur Sollkontur ebenfalls bei 0 bis -0,02 mm, für die Breitenabweichung der Nut zwischen +0,3 und -0,1 mm, für die Höhenabweichung im Bereich um 0,01 mm und für Abweichung des Krümmungsradius im Bereich um 0,02 mm.

Die Tannennuten sind im Betrieb stark belastet und stellen daher hohe Anforderungen an die Fertigung und Qualitätssicherung. Zur Prüfung der Tragschultern sind verschiedene Verfahren und Vorrichtungen bekannt, wie etwa Lasertracker, mechatronische Prüfvorrichtungen sowie maschinenintegrierte Prüf- bzw. Überwachungsverfahren. Bei der Prüfung der Tragschultern fallen für jeden gemessenen Profilschnitt Daten von einer Vielzahl verschiedener Abstandssensoren an. Damit lässt sich zwar die Einhaltung der geometrischen Anforderungen prüfen, jedoch ist im Fehlerfall eine Aussage in Bezug auf die Fehlerursachen kaum möglich. Unterschiedliche Ursachen, die im Fräsprozess, der Fräsmaschine oder auch in der Positionierung der Prüfvorrichtung selbst zu finden sind, überlagern sich aber und führen schließlich zu Messergebnissen, die ein Eingreifen erforderlich machen, ohne dass eindeutig ersichtlich wäre, an welcher Stelle die Ursache des Fehlers zu suchen ist.

Eine Aufgabe der Erfindung besteht darin, eine Prüfvorrichtung für Tragschultern von Tannennuten bereitzustellen, die es ermöglicht, die Messergebnisse an gefrästen Profilnuten eindeutig auf die einzelnen möglichen Fehlerursachen zurückzuführen.

Nach einem ersten Gesichtspunkt der vorliegenden Erfindung weist ein Verfahren zum Prüfen von Profilnuten mit wenigstens einem Paar von Anlageflächen unter Verwendung eines Prüfkörpers mit mehreren Messflächen, dessen Querschnittsform der Geometrie der zu prüfenden Nut derart angepasst ist, dass die Messflächen des Prüfkörpers wenigstens jeweils einer Anlagefläche der Nut sowie dem Nutgrund gegenüberliegen, wobei in den Messflächen des Prüfkörpers eine Mehrzahl von insbesondere faseroptischen Abstandssensoren in wenigstens zwei zur Querschnittsebene des Prüfkörpers parallelen Messebenen derart angeordnet sind, dass in einer ersten Messebene in jeder einer Anlagefläche oder dem Nutgrund gegenüberliegenden Messfläche wenigstens zwei Abstandssensoren vorgesehen sind und in einer zweiten Messebene in der dem Nutgrund gegenüberliegenden Messfläche und in einer weiteren Messfläche jeweils wenigstens ein Abstandssensor in Profillängsrichtung auf einer Linie mit jeweils einem der Abstandssensoren in der ersten Messebene vorgesehen sind, die Schritte auf: Positionieren des Prüfkörpers in der Nut; Anlegen des Prüfkörpers an wenigstens einer der Anlagenflächen der Nut und Fixieren des Prüfkörpers in der Nut durch Aufrechterhalten einer vorbestimmten Anpresskraft; Aktivieren der Abstandssensoren und Empfangen von Signalen von diesen; Berechnen eines Abstandswerts für jeden Abstandssensor auf der Grundlage der Sensorsignale; Berechnen eines Abstandsabweichungswerts für jeden Abstandssensor gegenüber einem vorab gespeicherten Referenzquerschnitt der Nut; Berechnen von Lageabweichungen des Prüfkörpers gegenüber der Nut auf der Grundlage der Abstandsabweichungswerte für die Abstandssensoren in der ersten und zweiten Messebene unter der Annahme, dass sich die Nutgeometrie zwischen der ersten und der zweiten Nutebene im Wesentlichen nicht ändert; Berechnen von korrigierten Abstandsabweichungswerten für die Abstandssensoren der ersten Messebene durch Kompensieren der berechneten Lageabweichungen; und Berechnen einer Ist-Geometrie der Nut auf der Grundlage der kompensierten Abstandsabweichungswerte für die Abstandssensoren der ersten Messebene.

Mit dem vorgeschlagenen Verfahren ist es möglich, bei den Messergebnissen an gefrästen Profilnuten eindeutig zwischen fertigungsbedingten Fehlern und Messfehlern zu unterscheiden. Da auf jeder Messfläche des Prüfkörpers zwei Sensoren in der gleichen Querschnittsebene angeordnet sind, wird es möglich, durch Vergleich von Spaltbreiten bzw. Tragflankenwinkeln der jeweils an der der konkaven und konvexen Nutflanke gegenüberliegenden Messfläche gemessenen Wert eine unsymmetrische Zentrierung des Prüfkörpers an den Tragschultern der beiden Nutflanken zu ermitteln. Mit dem zusätzlichen Sensor in einer zweiten Messebene kann durch Auswertung des Abstandswerts des zusätzlichen Sensors gegenüber den übrigen Sensoren dieser Messfläche eine Verdrehung des Prüfkörpers um ihre Symmetrieachse ermittelt werden. Mit den Bodensensoren kann der Abstand zum Nutgrund und damit die Höhe und der Tragschultern der Nut sowie ein Höhenversatz der Tragschultern auf der konkaven und konvexen Seite der Nut erfasst und aus der Höhe auch die Nutbreite berechnet werden. Die in der Bodenfläche des Prüfkörpers in der zweiten Messebene angeordneten Sensoren erlauben es, eine Kippung der Vorrichtung in Richtung des Nutverlaufs zu erkennen. Dadurch können z.B. Messfehler, die etwa durch einen Fehlstellung des Prüfkörpers verursacht werden, herausgerechnet und die tatsächliche Nutgeometrie genauer und zuverlässiger ermittelt werden. Die Verwendung von faseroptischen Abstandssensoren in einem der Form der Nut angepassten Prüfkörper erlaubt dabei eine hochgenaue Vermessung des Nutquerschnitts und eine kompakte Bauform. Dadurch, dass die Anordnung der Abstandssensoren die Erfassung einer Verdrehung des Prüfkörpers in drei Raumachsen ermöglicht, wird es möglich, bei Abweichungen der gemessenen von der Sollgeometrie mögliche Fehlerursachen zu identifizieren, zu quantifizieren und zu gewichten. Die Entwicklung neuer faseroptischer Abstandssensoren mit geringer Baugröße und hoher Messgenauigkeit erleichtert dabei die Unterbringung in dem Prüfkörper. Die faseroptischen Abstandssensoren integrieren den eigentlichen Messfühler (die Ferrule) mit der Zuleitung (den Lichtleitfasern). Die Ferrulen können hochgenau in entsprechenden Ausnehmungen platziert werden und definieren durch ihr vorderes Ende die Sensorposition. Besonders vorteilhaft sind die Ferrulen aus einem keramischen Material hergestellt und sind die Lichtleitfasern darin fixiert.

In einer Ausgestaltung der Erfindung sind in der zweiten Messebene in der dem Nutgrund gegenüberliegenden Messfläche wenigstens zwei Abstandssensoren angeordnet. Eine solche Anordnung erleichtert die Anwendung des Verfahrens bei engen Messbereichen, während bei weiterem Messbereich an dieser Stelle ein Abstandssensor ausreichen kann.

In einer weiteren Ausgestaltung der Erfindung sind Messflächen vorgesehen, die jeweils einem Konusabschnitt der Nut gegenüberliegen, und ist in jeder einem Konusabschnitt der Nut gegenüberliegenden Messfläche wenigstens ein Abstandssensor vorgesehen. Durch das Messen der Abstände auf dem Innenkonus kann der Konuswinkel und damit die bei einem seriellen Fräsen der Nutflanken auftretende seitliche Abdrängung des Fräsers, unabhängig von anderen Einflüssen wie z.B. Fehler am Tragflankenwinkel, ermittelt werden. Ist der tatsächliche Konuswinkel am Profilfräswerkzeug bekannt, können die geometrischen Abweichungen, die sich aus der seitlichen Fräserabdrängung und einem Fehler am Tragflankenwinkel ergeben, differenziert werden. Dadurch, dass diese beiden Störgrößen jeweils unabhängig voneinander quantifizierbar sind, kann die Nutbreite für jede erforderliche Bezugsebene unabhängig von etwaigen Winkelfehlern bestimmt werden. Bevorzugt sind zum Bestimmen der Nutbreite an zwei gegenüberliegenden Konusabschnitten jeweils zwei Abstandssensoren vorgesehen. Die beiden Abstandssensoren eines jeden Konusabschnitts sind übereinanderliegend platziert und ihren entsprechenden Abstandssensoren an dem anderen Konusabschnitt gegenüberliegend angeordnet.

Vorzugsweise weist das Verfahren weiter die Schritte auf: Berechnen linear unabhängiger Kennwerte auf der Grundlage der Abstands- bzw. Abstandsabweichungswerte; und Identifizieren von Fehlerursachen aus vorgegebenen Typen von Fertigungsfehlern durch Vergleichen der Kennwerte mit einer vorab gespeicherten Tabelle. So können die einzelnen möglichen Fehlerursachen vorab in einen theoretischen mathematischen Zusammenhang mit zu erwartenden Abweichungen gebracht und die Beurteilung der Fehlerursachen auf der Grundlage der Abstandswerte erleichtert werden.

Besonders bevorzugt umfasst das Verfahren ferner einen Schritt eines Quantifizierens der Fehlerursache oder der Fehlerursachen, wobei eine Plausibilitätsprüfung der identifizierten Fehlerursachen vorgesehen sein kann. Typischerweise treten sowohl Fertigungsfehler als auch Messfehler auf und können auch mehrere Arten von Fertigungs- und/oder Messfehlern gleichzeitig auftreten. Die Quantifizierung der Fehlerursachen ermöglicht es, einzelne Fehlerursachen zu isolieren und den Fräsprozess zu optimieren.

Vorzugsweise wird eine berechnete Fehlstellung des Prüfkörpers nur dann kompensiert, wenn sie einen vorgegebenen Schwellenwert überschreitet. So können fehlerhafte Fehlstellungsberechnungen, die etwa durch Oberflächenunebenheiten ausgelöst werden, ignoriert werden.

Die Information über die identifizierten Fehlerursachen kann, vorzugsweise in quantifizierter Form, zur Information eines Bedieners ausgegeben werden. Ebenso ist eine Ausgabe einer Warnmeldung, wenn eine identifizierte Fehlerursache oder eine berechnete Fehlstellung einen vorbestimmten, vorzugsweise frei wählbaren Grenzwert überschreitet, vorteilhaft. So kann beispielsweise bei Erreichen eines vorbestimmten Grenzwerts für eine Fehlstellung des Prüfkörpers die Messung unterbrochen, der Prüfkörper neu justiert und die Messung wiederholt werden. So können zuverlässigere Messergebnisse erzielt werden.

Die Verfahrensschritte können für eine Mehrzahl von Einzelquerschnitten der Nut wiederholt werden, um die Nut in ihrem gesamten Verlauf zu vermessen. Dabei kann eine Korrelation der Daten zwischen einzelnen Prüfschnitten innerhalb einer Nut vorgenommen werden.

Vorzugsweise ist ein Schritt eines Auswertens von Ausgangssignalen von Winkel- und Weggebern, die im Zusammenhang mit einer Halterung für den Prüfkörper stehen, vorgesehen, um einzelne Messungen innerhalb einer Nut anhand von Ausgabewerten der Winkel- und Weggeber in geometrischen Bezug zueinander zu bringen.

Besonders bevorzugt werden die Messergebnisse der einzelnen Prüfschnitte innerhalb einer Nut in ein mathematisches, dreidimensionales Modell der Nut transformiert. Dann kann ein Prüfprotokoll auf der Grundlage eines Vergleichs des erzeugten Modells mit einer Nominalnut ausgegeben werden.

Nach einem zweiten Gesichtspunkt der Erfindung wird eine Prüfapparatur zum Prüfen von Profilnuten mit wenigstens einem Paar von Anlageflächen vorgeschlagen, aufweisend: einen Prüfkörper mit mehreren Messflächen, dessen Querschnittsform der Geometrie der zu prüfenden Nut derart angepasst ist, dass die Messflächen des Prüfkörpers wenigstens jeweils einer Anlagefläche der Nut sowie dem Nutgrund gegenüberliegen, wobei in den Messflächen des Prüfkörpers eine Mehrzahl von insbesondere faseroptischen Abstandssensoren in wenigstens zwei zur Querschnittsebene des Prüfkörpers parallelen Messebenen derart angeordnet sind, dass in einer ersten Messebene in jeder einer Anlagefläche oder dem Nutgrund gegenüberliegenden Messfläche wenigstens zwei Abstandssensoren vorgesehen sind und in einer zweiten Messebene in der dem Nutgrund gegenüberliegenden Messfläche und in einer weiteren Messfläche jeweils wenigstens ein Abstandssensor in Profillängsrichtung auf einer Linie mit jeweils einem der Abstandssensoren in der ersten Messebene vorgesehen sind, und ein Steuergerät, das zur Ausführung der vorstehend beschriebenen Verfahrensschritte nach einem der vorstehenden Ansprüche eingerichtet. In einer Ausgestaltung der Erfindung sind in der zweiten Messebene in der dem Nutgrund gegenüberliegenden Messfläche wenigstens zwei Abstandssensoren angeordnet. In einer weiteren Ausgestaltung der Erfindung sind auch Messflächen vorgesehen, die jeweils einem Konusabschnitt der Nut gegenüberliegen, und ist in jeder einem Konusabschnitt der Nut gegenüberliegenden Messfläche wenigstens ein Abstandssensor vorgesehen.

Eine Abdrückeinrichtung zum Abdrücken des Prüfkörpers vom Nutgrund, vorzugsweise mit einem innerhalb des Prüfkörpers angeordneten Pneumatikzylinder und einem Stempel oder elektromechanisch angetrieben, der mittels der Wirkung des Pneumatikzylinders von der Bodenfläche des Prüfkörpers ausfahrbar ist, kann vorgesehen sein, um den Prüfkörper an den Anlageflächen anzudrücken.

Je ein oder zwei in den oberen, einer Anlagefläche gegenüberliegenden Messflächen eingelassene Nuten können vorgesehen sein, in welchen jeweils ein Einsatz aus einem verschleißfesten Material angeordnet und befestigt ist, wobei die Einsätze sich geringfügig über die Messflächen erheben und vorzugsweise austauschbar sind. So wird ein definierter Soll-Abstand der Messflächen von den Anlageflächen der Nut vorgegeben, ein stabiler Sitz der Prüfvorrichtung in der Nut sichergestellt und ein Verschließ der Messflächen bei häufigem Einsatz vermieden.

Zur einfachen, gegebenenfalls automatischen Positionierung des Prüfkörpers kann eine Halte- und Verfahrvorrichtung zum Halten und Verfahren des Prüfkörpers in drei Raumrichtungen vorgesehen sein. Mit dieser im Zusammenhang stehende Weggeber und Winkelgeber können verwendet werden, um die Daten für einzelne Prüfschnitte miteinander in Zusammenhang zu bringen. Ferner können Kraftgeber vorgesehen sein, die eine Beschädigung der Apparatur oder des Werkstücks bei zu großer Kraftaufwendung vermeiden helfen.

Vorzugsweise ist der Prüfkörper aus mehreren Stücken zusammengesetzt, die in Profilrichtung hintereinander angeordnet sind und die gleiche Profil-Außenkontur aufweisen, und sind die Sensoren in der Trennebene oder den Trennebenen zwischen den einzelnen Stücken angeordnet. Eine solche Anordnung erleichtert die Montage der Sensoren und die Führung der Lichtleiter.

Im Folgenden werden bevorzugte Ausführungsformen eines erfindungsgemäßen Behälters anhand der beigefügten schematischen Zeichnungen erläutert.

Es zeigt:
- Fig. 1: eine perspektivische Gesamtansicht eines Prüf- körpers nach einem ersten Ausführungsbeispiel der Erfindung;
- Fig. 2: eine Explosionsdarstellung des Prüfkörpers aus Fig. 1;

- Fig. 3: ein Hauptstück des Prüfkörpers aus Fig. 1 und 2;
- Fig. 4: einen unteren Bereich des Hauptstücks aus Fig. 3 in vergrößerter Ansicht und in etwas unter- schiedlicher Perspektive;
- Fig. 5: eine Prüfanordnung mit dem Prüfkörper gemäß der Erfindung;
- Fig. 6: eine schematische Darstellung einer seitlichen Asymmetrie des Prüfkörpers in einer zu prüfen- den Tannennut;
- Fig. 7: einen Ausschnitt aus Fig. 6 mit eingezeichne- ten Kenngrößen;
- Fig. 8: eine schematische Darstellung einer axialen Verdrehung des Prüfkörpers in einer zu prüfen- den Tannennut;
- Fig. 9: eine schematische Darstellung einer Longitudi- nalkippung des Prüfkörpers in einer zu prüfen- den Tannennut;
- Fig. 10: die Lage des Prüfkörpers in einem zu prüfenden Nutquerschnitt bei zu großer Nutbreite;
- Fig. 11: die Lage des Prüfkörpers in einem zu prüfenden Nutquerschnitt bei einseitiger Fräserabdrän- gung;
- Fig. 12: die Lage des Prüfkörpers in einem zu prüfenden Nutquerschnitt bei beidseitiger Fräserabdrän- gung;
- Fig. 13: die Lage des Prüfkörpers in einem zu prüfenden Nutquerschnitt in einem Fall einer Höhenver- satzes zwischen Flanken der Nut;
- Fig. 14-17: die Lage des Prüfkörpers in einem zu prüfenden Nutquerschnitt, wenn sich den in Fig. 10-13 gezeigten Fertigungsfehlern eine Fehlstellung des Prüfkörpers um die x-Achse überlagert;
- Fig. 18-21: die Lage des Prüfkörpers in einem zu prüfenden Nutquerschnitt, wenn sich den in Fig. 10-13 gezeigten Fertigungsfehlern eine Fehlstellung des Prüfkörpers um die y-Achse überlagert;
- Fig. 22-25: die Lage des Prüfkörpers in einem zu prüfenden Nutquerschnitt, wenn sich den in Fig. 10-13 gezeigten Fertigungsfehlern eine Fehlstellung des Prüfkörpers um die z-Achse überlagert;
- Fig. 26: eine Explosionsdarstellung eines Prüfkörpers gemäß einem zweiten Ausführungsbeispiel der Erfindung;
- Fig. 27: ein Hauptstück des Prüfkörpers aus Fig. 26 in etwas unterschiedlicher Perspektive; und
- Fig. 28: einen unteren Bereich des Hauptstücks aus Fig. 27 in vergrößerter Ansicht und in erneut etwas unterschiedlicher Perspektive.

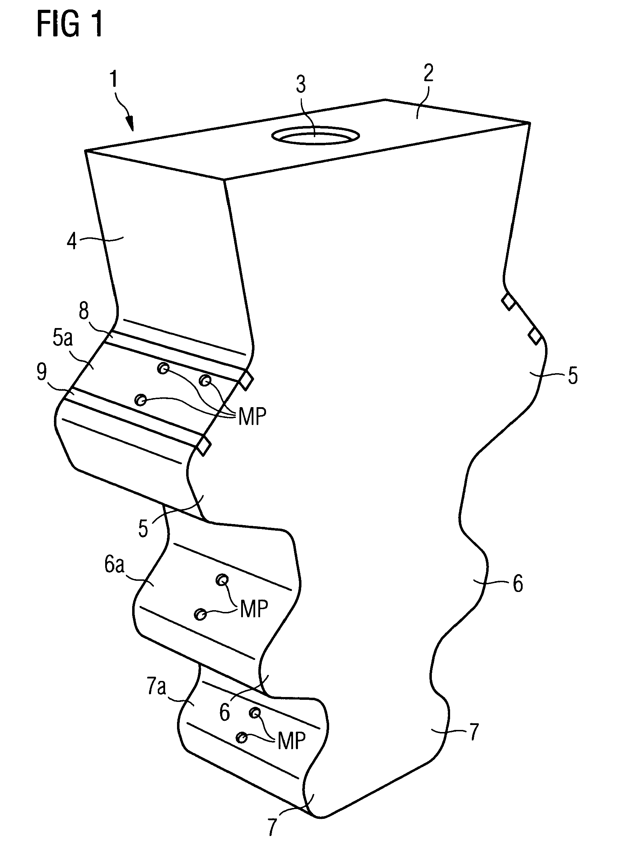

Zunächst wird der Aufbau und die Verwendung eines Prüfkörpers 1 der vorliegenden Erfindung anhand der Darstellung in Fig. 1 bis 5 erläutert.

Fig. 1 zeigt den Prüfkörper 1 als ein erstes Ausführungsbeispiel in perspektivischer Gesamtansicht.

Der Prüfkörper 1 weist eine prismatische Kontur auf mit einem symmetrisch-trapezförmigen Grundquerschnitt, von welchem mehrere seitliche Vorsprünge (weiter unten genauer beschrieben) abragen. Die parallelen Seiten des Trapezes beschreiben eine Oberseite und eine Unterseite (Bodenfläche) des Prüfkörpers 1. Eine Anschlussfläche 2 des Prüfkörpers 1, die durch die Oberseite des trapezförmigen Grundquerschnitts definiert wird, stößt an eine nicht näher definierte Werkzeugaufnahme zur Führung und Halterung des Prüfkörpers 1. Eine Axialbohrung 3 erstreckt sich in der Symmetrieachse des Prüfkörpers 1 von der Anschlussfläche 2 aus durch den Prüfkörper 1 hindurch.

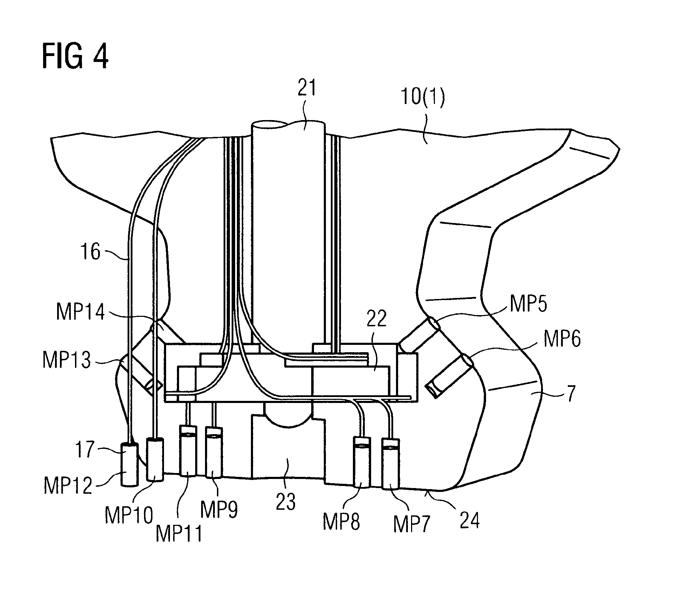

Die schrägen Seiten des trapezförmigen Querschnitts definieren laterale Seiten oder Flanken 4 des Prüfkörpers. Von beiden Flanken 4 weisen jeweils drei Vorsprünge 5, 6, 7 von dem trapezförmigem Grundquerschnitt nach außen ab. Der obere Vorsprung 5 und der mittlere Vorsprung 6 sind beidseits von der jeweiligen Flanke 4 begrenzt, während der untere Vorsprung 7 in die Bodenfläche (in Fig. 4 mit 24 bezeichnet) des Prüfkörpers 1 übergeht. Die Querschnittsform des Prüfkörpers 1 ist an ein zu prüfendes Nutprofil (hier einer Tannennut) angepasst, wobei zwischen den Seiten des Prüfkörpers 1 und der Nut ein gewisses Spiel vorhanden ist. Dabei entsprechen die Flanken 4 des Prüfkörpers 1 in etwa den Nutflanken und entspricht die Bodenfläche des Prüfkörpers 1 in etwa dem Nutgrund. Die Oberseiten der Vorsprünge 5, 6, 7 bilden jeweilige Messflächen 5a, 6a, 7a, die jeweiligen Anlageflächen der Tannennut entsprechen und in etwa den Tragschultern eines Laufradfußes nachgebildet sind.

In den Messflächen 5a der oberen Vorsprünge 5 sind jeweils zwei Stege 8, 9 eingelassen. Die Stege 8, 9 erlauben eine definierte Ausrichtung des Prüfkörpers 1 an den obersten Anlageflächen der Nut. Die Stege 8, 9 sind aus Hartmetall oder einem andere geeigneten, insbesondere verschließfesten Werkstoff hergestellt und verbessern die Verschleißeigenschaften des Prüfkörpers 1.

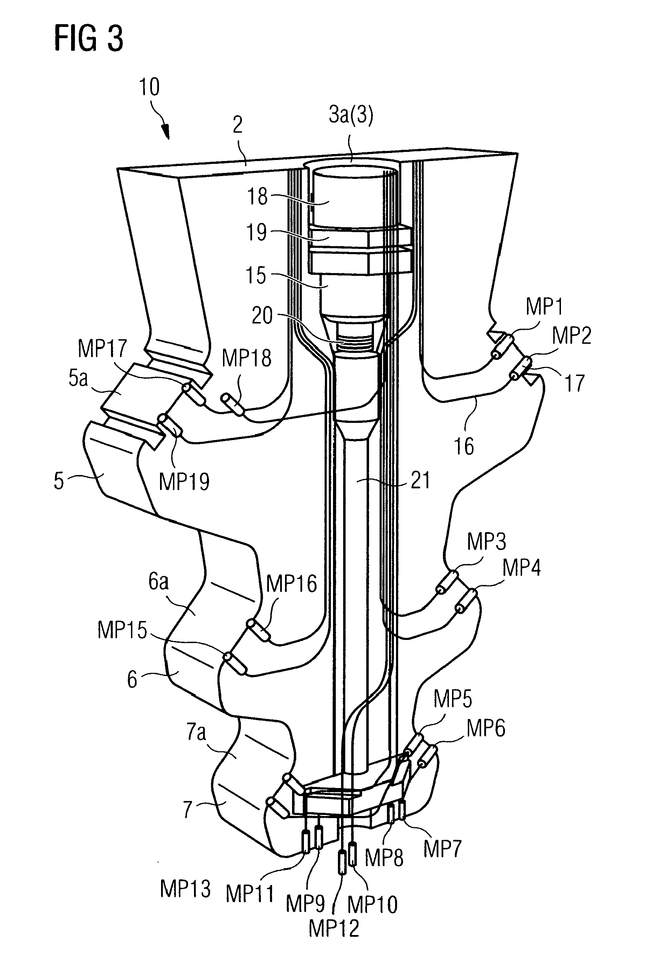

Auf bzw. in den Messflächen 5a, 6a, 7a, 4 und 6 sind Messpunkte MP angeordnet, die weiter unten im Zusammenhang mit Fig. 3 und 4 genauer beschrieben werden.

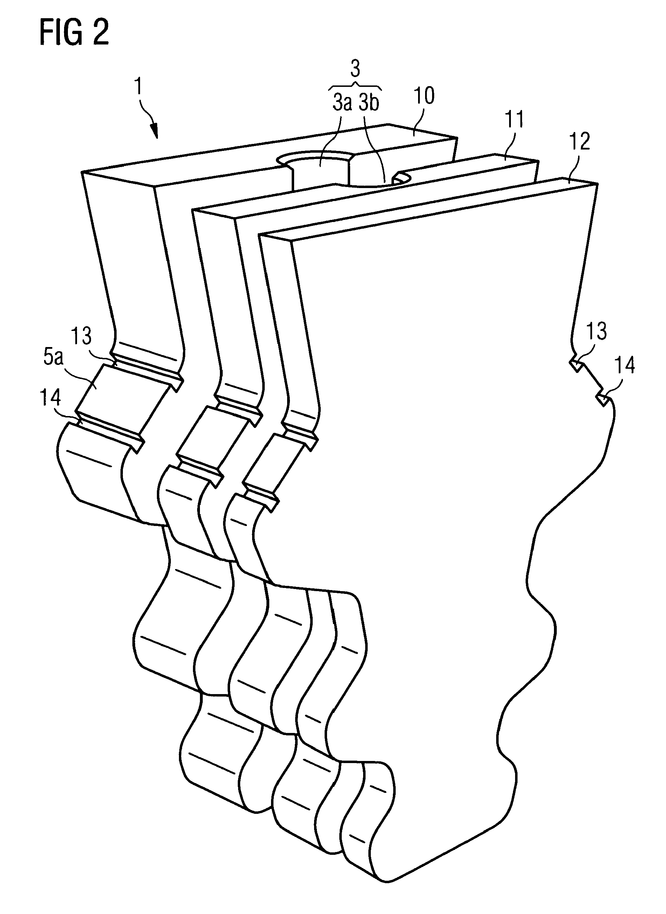

Fig. 2 zeigt in einer Explosionsansicht einen dreiteiligen Aufbau des Prüfkörpers 1, wie er in Fig. 1 nicht sichtbar ist.

Gemäß der Darstellung in Fig. 2 besteht der Prüfkörper 1 aus einem Hauptstück 10, einem Mittelstück 11 und einem Endstück 12, die jeweils die gleiche prismatische Kontur aufweisen und in Profilrichtung aneinanderliegen. Das Hauptstück 10 ist genauso dick wie das Mittelstück 11 und das Endstück 12 zusammen. Aus der Figur wird deutlich, dass die Bohrung 3 in einer in axialer Richtung verlaufenden Ebene geteilt ist und zu einem ersten Anteil 3a in dem Hauptstück 10 und zu einem zweiten Anteil 3b in dem Mittelstück 11 verläuft. (Die Bohrung 3 wird vorteilhaft im aufeinandergelegten Zustand wenigstens des Hauptstücks 10 und des Mittelstücks 11 gefertigt.)

In der Figur ist auch auf jeder der oberen Tragschultern 5 eine innere Nut 13 und eine äußere Nut 14 dargestellt, die sich über das Hauptstück 10, das Mittelstück 11 und das Endstück 12 erstrecken. (Auch die Nuten 13, 14 werden im zusammengebauten Zustand des Prüfkörpers 1 gefertigt.) Die Nuten 13, 14 nehmen die Stege 8, 9 (vgl. Fig. 1) auf.

Fig. 3 zeigt den Aufbau des Hauptstücks 10 des Prüfkörpers 1 genauer.

In der Axialbohrung 3 (hier nur der Bohrungsanteil 3a gezeigt) ist ein Pneumatikzylinder 15 aufgenommen. Der Pneumatikzylinder 15 dient dem Abdrücken des Prüfkörpers 1 gegen den Nutgrund und wird weiter unten genauer erläutert. Lichtleiter 16 und Ferrulen 17 bilden zusammen jeweilige faseroptische Abstandssensoren, die der Messung des Abstands zwischen definierten Punkten des Prüfkörpers 1 und der Nutwand dienen. Die Ferrulen 17 sind aus einem geeigneten Material wie etwa Keramik hergestellt und in Ausgängen (nicht näher dargestellt) angeordnet, die in der Trennebene zwischen den Teilstücken des Prüfkörpers 1 eingebracht sind. Die Ausgänge sind mit hoher Genauigkeit hinsichtlich Tiefe, Durchmesser und Winkel in den Prüfkörper 1 eingearbeitet. Die Lichtleiter 16, die am hinteren Ende der Ferrulen 17 befestigt sind, erstrecken sind von dort aus in geeigneten Rillen (nicht näher dargestellt), die von den Ausgängen aus zunächst radial nach innen und dann beidseits entlang der Axialbohrung 3 zur Anschlussfläche 2 des Prüfkörpers 1 verlaufen, wo sie zusammengefasst und zu einer Auswerteapparatur (nicht näher dargestellt) geführt werden.

Die Anordnung der Abstandssensoren ist wie folgt. Auf beiden Seiten des Prüfkörpers 1 sind in der Messfläche 5a, 6a, 7a jedes Vorsprungs 5, 6, 7 wie auch in der Bodenfläche des Prüfkörpers 1 in der Trennebene zwischen dem Hauptstück 10 und dem Mittelstück jeweils zwei Abstandssensoren 16, 17 angeordnet. Die Trennebene zwischen dem Hauptstück 10 und dem Mittelstück bildet eine Haupt-Messebene. Zusätzlich sind in der Trennebene zwischen dem Mittelstück und dem Endstück (beide in der Figur weggelassen) weitere Abstandssensoren 16, 17 auf einer Seite des Prüfkörpers 1 (der linken Seite in der Figur) angeordnet, und zwar in der oberen Messfläche 5a ein Abstandssensor 16, 17, der in Profillängsrichtung auf einer Linie mit dem inneren der beiden dort in der Haupt-Messebene vorgesehenen Abstandssensoren 16, 17 angeordnet ist, und in der Bodenfläche zwei Abstandssensoren 16, 17, die in Profillängsrichtung auf einer Linie mit den beiden dort in der Haupt-Messebene vorgesehenen Abstandssensoren 16, 17 angeordnet sind. Die Trennebene zwischen dem Mittelstück und dem Endstück bildet somit eine Sekundär-Messebene, in welcher die wenigen zusätzlichen Abstandssensoren 16, 17 angeordnet sind. Insbesondere bilden die Ferrulen 17 die in Fig. 1 angedeuteten Messpunkte MP, die in Fig. 3 einzeln durchnummeriert sind. Die Zuordnung der Abstandssensoren 16, 17 (der Ferrulen 17) bzw. der Messpunkte MP zu ihrer Lage am Prüfkörper 1 geht aus nachstehender Tabelle 1 hervor.

**Tabelle 1**

| | Rechte Seite | | Linke Seite | |
|---|---|---|---|---|
| | Innen | Außen | Innen | Außen |
| Obere Schulter 5a | MP1 | MP2 | MP18 | MP17 |
| | | | MP19 (*) | |
| Mittlere Schulter 6a | MP3 | MP4 | MP16 | MP15 |
| Untere Schulter 7a | MP5 | MP6 | MP14 | MP13 |
| Boden (Grund) 24 | MP8 | MP7 | MP9 | MP11 |
| | | | MP10 (*) | MP12 (*) |

| | | | | |
|---|---|---|---|---|
| (*) in Sekundär-Messebene | | | | |

Es sind also insgesamt neunzehn Abstandssensoren 16, 17 vorgesehen.

Die Ferrulen 17 und Lichtleiter 16 sind mit einem geeigneten Mittel wie etwa einem UV-Kleber in den Bohrungen bzw. Rillen befestigt. Die einzelnen Stücke 10, 11, 12 des Prüfkörpers 1 sind im zusammengebauten Zustand ebenfalls mit geeigneten Mitteln miteinander verbunden, so etwa verklebt oder verschraubt, ggf. zusätzlich verstiftet.

Der Pneumatikzylinder 15 weist einen Zylinderkörper 18 auf der im oberen Drittel des Prüfkörpers 1 in der Axialbohrung 3 aufgenommen ist und mittels einer oberen Führung 19 gehalten wird. Der bewegliche Teil 20 des Pneumatikzylinders 15 ist mittels eines Gewindes mit einem Stempel 21 verbunden, der sich zur Unterseite des Prüfkörpers hin erstreckt.

In Fig. 4 ist der Bereich der unteren Vorsprünge 7 gegenüber der Darstellung in Fig. 3 in leicht veränderter Perspektive, d.h., mehr von der rechten Seite aus gesehen, und in vergrößerter Ansicht dargestellt.

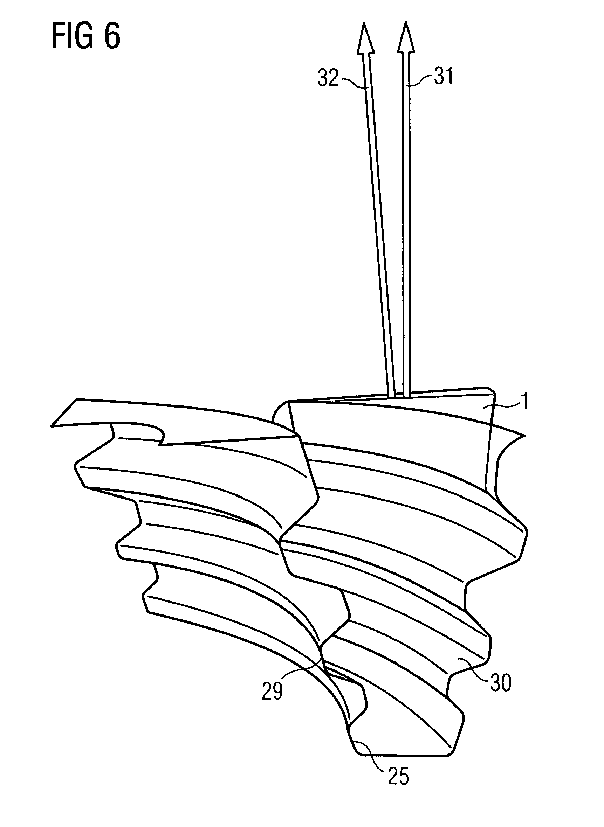

Gemäß der Darstellung in Fig. 4 ist der Stempel 21 in einer unteren Führung 22 gehalten und befindet sich im hier dargestellten, eingefahrenen Zustand des Pneumatikzylinders (15) innerhalb einer Austrittsbohrung 23, welche mit der Axialbohrung 3 (Fig. 1-3) fluchtet. Im ausgefahrenen Zustand des Pneumatikzylinders 15 ragt der Stempel 21 dagegen aus der Austrittsbohrung 23 über die Ebene der Bodenfläche 24 des Prüfkörpers 1 hinaus. Im Betrieb drückt der Stempel 21 gegen den Nutgrund und drückt den Prüfkörper mit den Stegen 8 (Fig. 1) gegen die Anlageflächen des Nutprofils. Da die Nut in ihrem Längsverlauf eine Krümmung aufweist (vgl. konvexe und konkave Nutflanken 29, 30 in Fig. 6), wird der Prüfkörper so bei idealer Ausrichtung an vier Punkten (konkave Seite) bzw. an zwei Punkten (konvexe Seite) zur Anlage gebracht.

Nachstehend wird die Ausdehnung der Prüfvorrichtung auf eine Prüfapparatur sowie deren Betriebsweise erläutert.

Eine Prüfapparatur (nicht näher dargestellt) weist eine verfahrbare Halterung, eine Steuergerät mit Ansteuerungs- und Auswerteelektronik auf und eine Druckerzeugungseinrichtung zur Erzeugung des erforderlichen Drucks für den Pneumatikzylinder auf. Das Steuergerät weist den an sich bekannten Aufbau eines Computers mit CPU, RAM, ROM, internem und/oder externem Speicher, einem I/O-Bus zur Kommunikation mit Peripheriegeräten zur Eingabe von Daten und Befehlen und zur Ausgabe von Daten, einen Netzwerkanschluss und dergleichen auf. Die Halterung weist Stellglieder wie Pneumatik- oder Hydraulikzylinder, Motoren, Getriebe oder dergleichen und geeignete Übertragungsglieder sowie Weg- und Winkelgeber an sich bekannter Art auf. Ferner sind Einrichtungen zur Rückkopplung von Bewegungswiderständen vorgesehen, wie etwa durch direkte Kraft- oder Momentenmessung oder durch Messung des Motormoments, der Motorspannung oder -leistung, des pneumatischen oder hydraulischen Drucks, oder dergleichen.

Zunächst wird der Prüfkörper 1 in die verfahrbaren Halterung eingespannt und in die Nut eingeführt. Sodann wird der Prüfkörper 1 an einen vorbestimmten Prüfquerschnitt verfahren und dort mittels des Pneumatikzylinders 15 mit einer vorgegebenen Kraft fixiert. Die Abstandssensoren werden aktiviert und die Antwortsignale empfangen. Die Antwortsignale werden in der Auswerteelektronik in Abstandswerte umgerechnet und hieraus unter Zugrundelegung der vorab gespeicherten Profilgeometrie des Prüfkörpers 1 die Geometrie des Prüfquerschnitts berechnet.

Bei der Auswertung der Messwerte wird z.B. aus dem Abstand der Sensoren in der Bodenfläche die Nutbreite berechnet, werden aus den Abständen der sonstigen Sensoren in der Hauptmessebene die relative Lage der Anlageflächen in den ausgewählten Messpunkten (MP) sowie die mittlere Winkellage der Anlageflächen berechnet, und werden aus den Abständen der Sensoren in der Sekundärmessebene Fehlstellungen des Prüfkörpers berechnet.

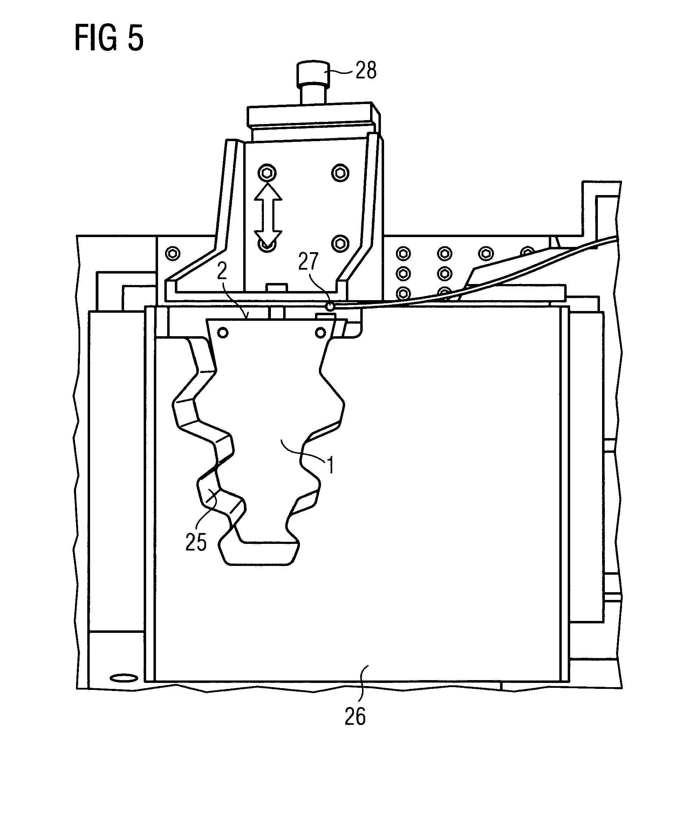

Fig. 5 zeigt die Anordnung des Prüfkörpers 1 in einer Prüfapparatur.

In einem Werkstück 26 ist eine Tannennut 25 eingearbeitet. Der Prüfkörper 1 ist in die Tannennut 25 eingesetzt und weist ein geringes Spiel zwischen seiner Außenkontur und der Wand der Tannennut 25 auf. Von der Stirnseite 2 des Prüfkörpers 1 führt eine Fasersonde 27 zu einer Ansteuerungs- und Auswertungsapparatur (nicht näher dargestellt). Die Fasersonde umfasst die Verlängerungen der insgesamt neunzehn bidirektionale Lichtleiter 16, die in den Ferrulen 17 enden und so die faseroptischen Abstandssensoren bilden. Der Prüfkörper 1 ist an einem Mikrometertisch 28 befestigt.

Im Betrieb liefern die Abstandssensoren 16, 17 in den Messpunkten MP1 bis MP19 Signale, die den Abstand des jeweiligen Sensors zur Wand der Tannennut 25 widerspiegeln. Anhand der Abstandswerte kann die Nutform mit hoher Genauigkeit vermessen werden. Bei der Prüfung der Tragschultern fallen für jeden gemessenen Profilschnitt Daten von einer Vielzahl verschiedener Abstandssensoren an.

Die oben beschriebene Anordnung der Abstandssensoren 16, 17 in den Messpunkten MP1 bis MP19 am Prüfkörper 1 erlaubt im Unterschied zu herkömmlichen Verfahren auch eine automatische Datenanalyse, welche unterschiedliche Fehlerursachen differenziert und so Fehler bis auf ihre Ursachen zurückführen kann. So können z.B. Fräserabdrängung oder Höhenversatz erkannt, quantifiziert und gewichtet werden.

Fehlstellungen der Prüfvorrichtung werden durch zusätzliche Sensoren erfasst und können mathematisch kompensiert werden. Erreicht die Fehlstellung ein Ausmaß, das eine sinnvolle Auswertung der Messergebnisse nicht mehr zulässt, erhält der Bediener die Aufforderung, das Prüfsegment neu zu positionieren.

Eine Bewertung der Kippung der Prüfvorrichtung aus ihrer Idealposition, d.h., eine Fehlstellung der Prüfvorrichtung 1 in drei Freiheitsgraden, wird nachstehend anhand der Fig. 6 bis 9 erläutert.

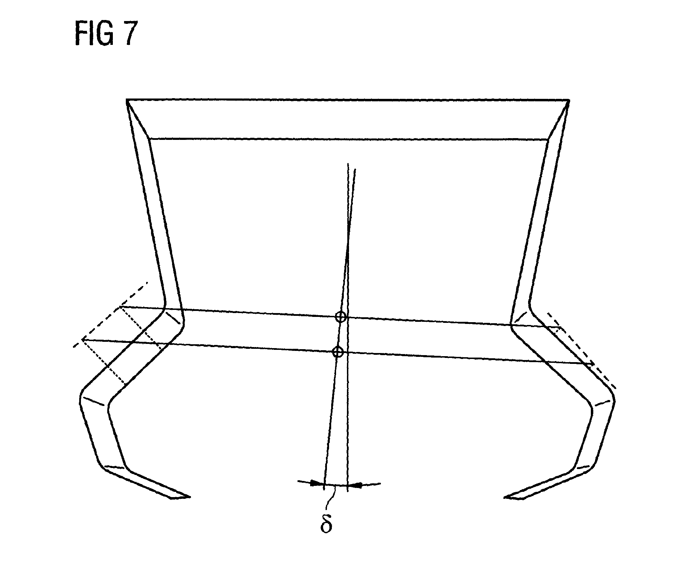

In Fig. 6 und Fig. 7 ist eine unsymmetrische Zentrierung der Prüfvorrichtung 1 an den Tragschultern der beiden Nutflanken (Nut 25) dargestellt. Ein solcher Seiten- oder Winkelversatz (δ in Fig. 7) wird durch den Vergleich von Spaltbreiten (Tragflankenwinkel) der jeweils der konkaven Nutflanke 30 und der konvexen Nutflanke 29 gegenüberliegende Tragschultern 5, 6, 7 aus den Signalen der dort angeordneten Abstandssensoren 16, 17 in den inneren und äußeren Messpunkten MP1 und MP2, MP3 und MP4, MP5 und MP6, MP14 und MP13, MP16 und MP15 sowie MP18 und MP17 ermittelt.

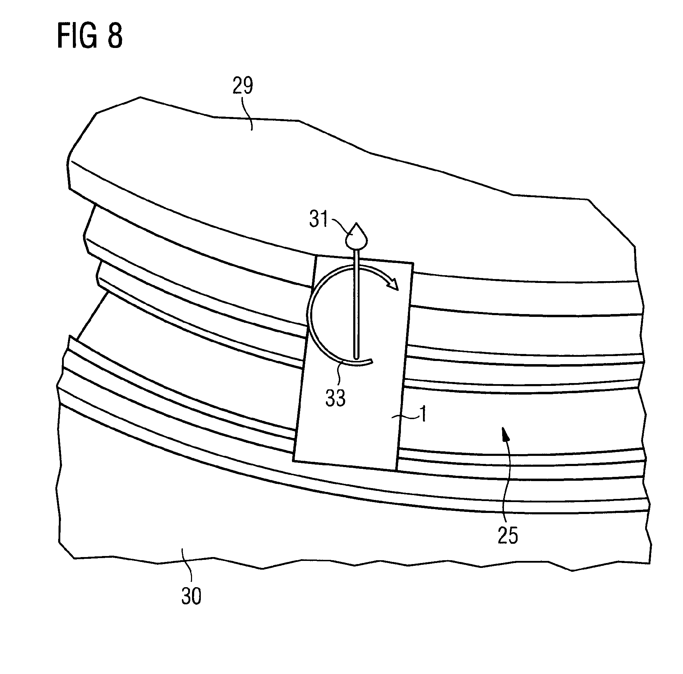

In Fig. 8 ist eine Verdrehung (gekrümmter Pfeil in der Figur) der Prüfvorrichtung 1 um ihre Symmetrieachse (gerader Pfeil in der Figur) gegenüber der Nut 25 dargestellt. Eine solche Verdrehung um die Symmetrieachse wird durch den zusätzlichen Abstandssensor 16, 17 in dem Messpunkt MP19, der in einer der beiden oberen Messflächen 5a in der Sekundärmessebene angeordnet ist, aufgenommen.

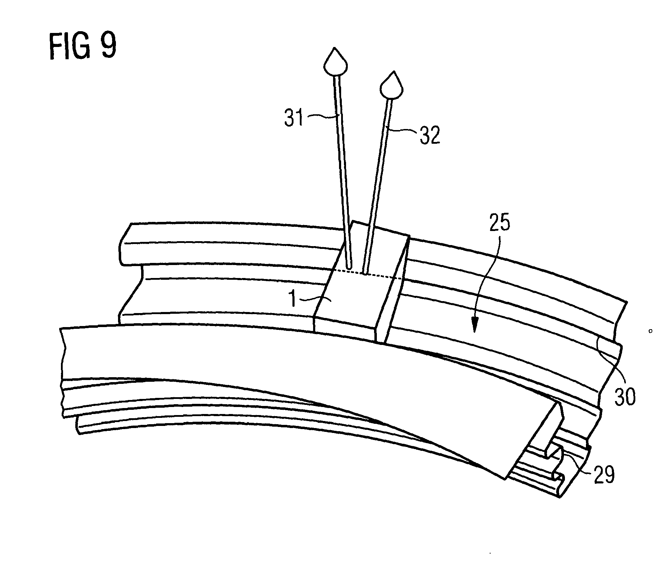

In Fig. 9 ist eine Kippung der Prüfvorrichtung 1 in Richtung des Nutverlaufs dargestellt. Eine solche Kippung wird durch einen der beiden zusätzlichen Abstandssensoren 16, 17 in den Messpunkten MP10 und MP12, die in der Bodenfläche 24 in der Sekundärmessebene angeordnet sind, aufgenommen.

Zwei Abstandssensoren 16, 17 (je nach erforderlichem Messbereich auch zwei gestaffelte Paare an der Unterseite der Prüfvorrichtung) messen den senkrechten Abstand zum Nutgrund in dem Bereich, der bei dem Fräsen der jeweiligen Nutflanke zusammen mit den Tragschultern erzeugt worden ist. Über diese Abstände wird die Nutbreite berechnet.

Auf der Grundlage der Messwerte werden für die verschiedenen Fehlerursachen linear unabhängige Kennwerte berechnet, die eine Angabe bzw. Quantifizierung der einzelnen Fehlerursachen ermöglichen. Hierzu kann eine Fehlermatrix vorab aufgestellt werden. Eine Meldung, die eine quantifizierte Fehlerursache beinhaltet, könnte z.B. lauten: "Fehlergröße zu 80% durch Fräserabdrängung verursacht".

Bei Überschreiten von Grenzwerten für die Fehlstellung der Prüfvorrichtung 1 erfolgt eine entsprechende Fehlermeldung mit der Aufforderung, diese Messung zu wiederholen.

Die Bestimmung der Fehlereinflüsse, die durch eine Fehlstellung der Prüfvorrichtung 1 hervorgerufen werden, ermöglicht bis zu einem gewissen Grad eine mathematische Kompensation dieser Fehler.

Die um mögliche Fehlereinflüsse aus der Messung bereinigten Messdaten werden einer automatischen Analyse auf mögliche Fehlerursachen und Plausibilität (Werkzeuggeometrie, Werkzeugabdrängung, Maschineneinflüsse) unterzogen. Bei Überschreitung von frei definierbaren Grenzwerten erfolgt die Ausgabe in Form einer entsprechenden Warnmeldung. Wenn z.B. festgestellt wird, dass die Fräserabdrängung an der konkaven Nutflanke einen vorgegebenen Grenzwert überschreitet, wird eine Meldung wie etwa "Fehler: Fräserabdrängung an der konkaven Nutflanke größer Grenzwert" ausgegeben.

Aufgrund der von den Abstandssensoren ermittelten Daten werden berechnet:
- Vertikale Abstände der Tragflächen auf jeder Nutflanke zueinander (inkl. Flankenwinkel)
- Höhenversatz zwischen den Tragflanken auf der konkaven und konvexen Nutseite
- Nutbreite.

Es erfolgt eine automatische Prüfung auf Datenkorrelation zwischen einzelnen Prüfschnitten innerhalb einer Nut.

Ein Ausbau der Vorrichtung zu einem 3D-Prüfgerät wird durch die folgenden Maßnahmen ermöglicht:
- Durch die Auswertung der Werte aus zusätzlichen Winkel- und Weggebern erhalten die einzelnen 2D-Messungen innerhalb einer Nut einen geometrischen Bezug zueinander;
- Damit erfolgt die mathematische Transformation der Messergebnisse in ein 3D-Modell der Nut;
- Der Vergleich der berechneten Nut mit der Nominalnut liefert die Daten für das Prüfprotokoll.

Durch das oben beschriebene Auswertesystem werden die mit der Prüfvorrichtung 1 für Tannennuten 25 aufgenommenen Messdaten nicht einfach ausgegeben und protokolliert, sondern in einer Art und Weise ausgewertet, die Fehler bei der Messwertaufnahme kompensiert und gleichzeitig die Messwerte auf mögliche Fehlerursachen bzw. Kombinationen aus diesen zurückführt.

Werden vorgegebene Grenzwerte überschritten, erhält der Bediener die entsprechenden Hinweise, auf welche Ursache der gemessene Fehler zurückzuführen ist. Fehler können mit dem Verfahren erstmals quantifiziert werden. Daraus können geeignete Korrekturmaßnahmen für die Fertigung abgeleitet werden.

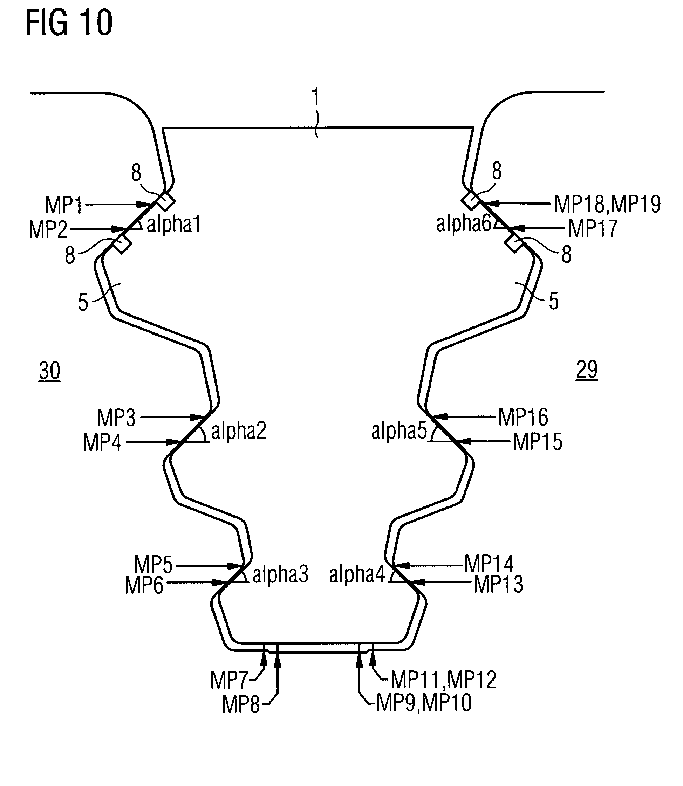

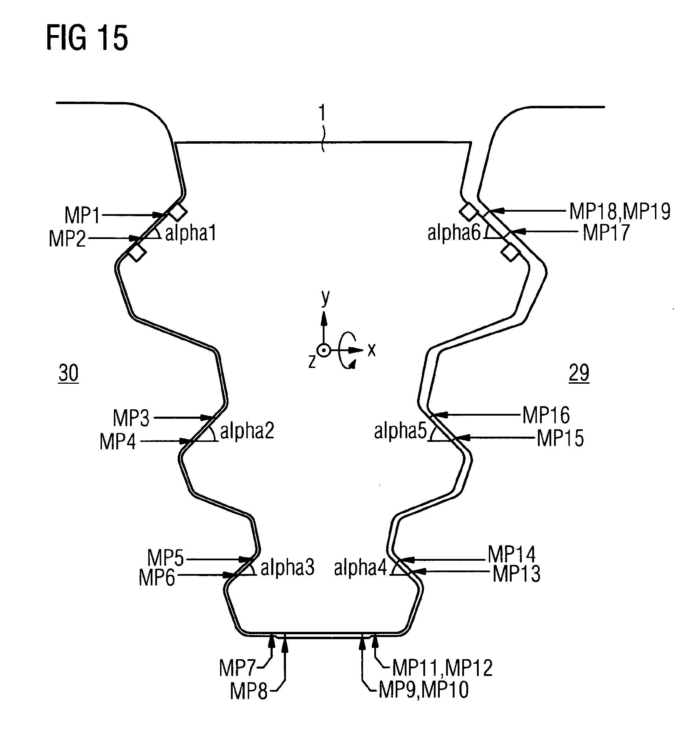

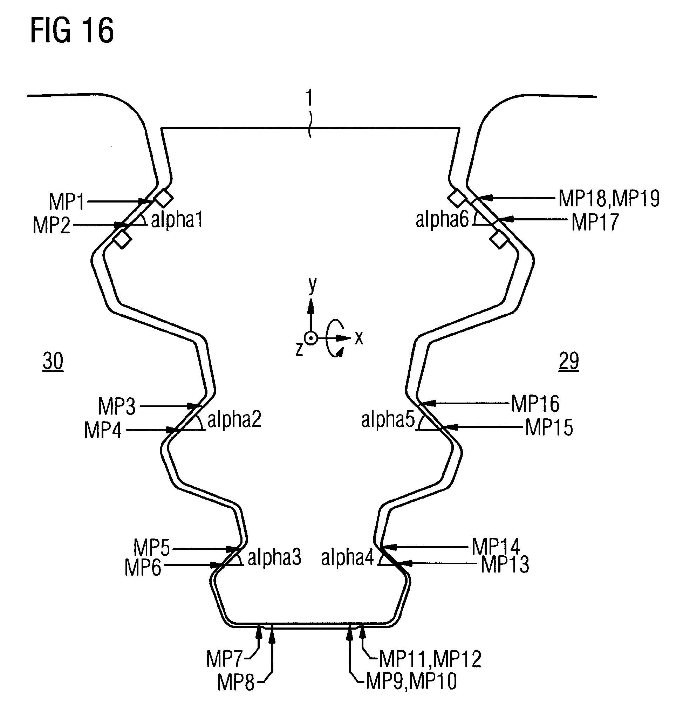

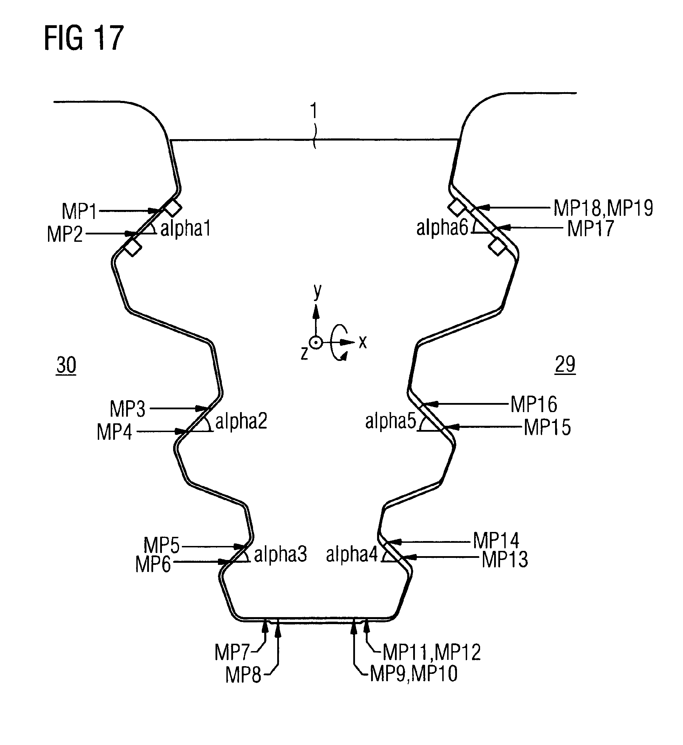

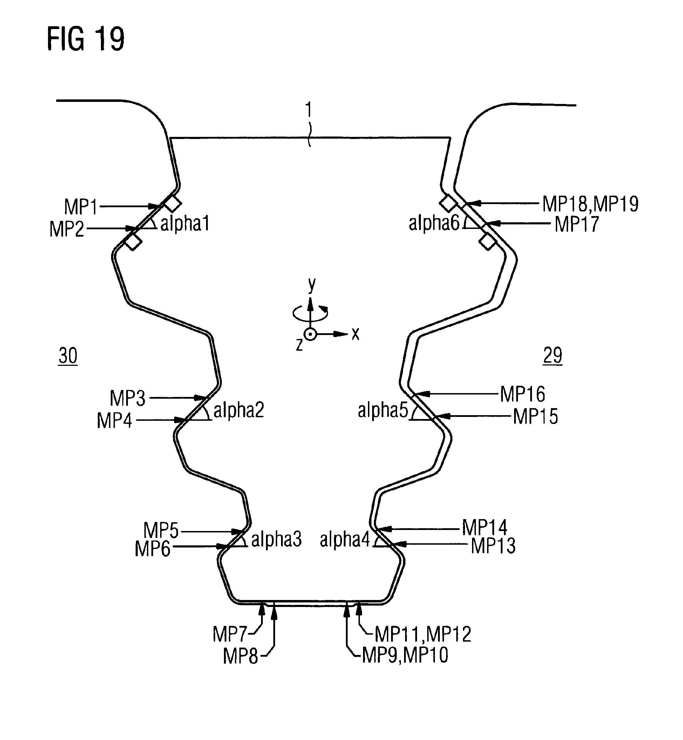

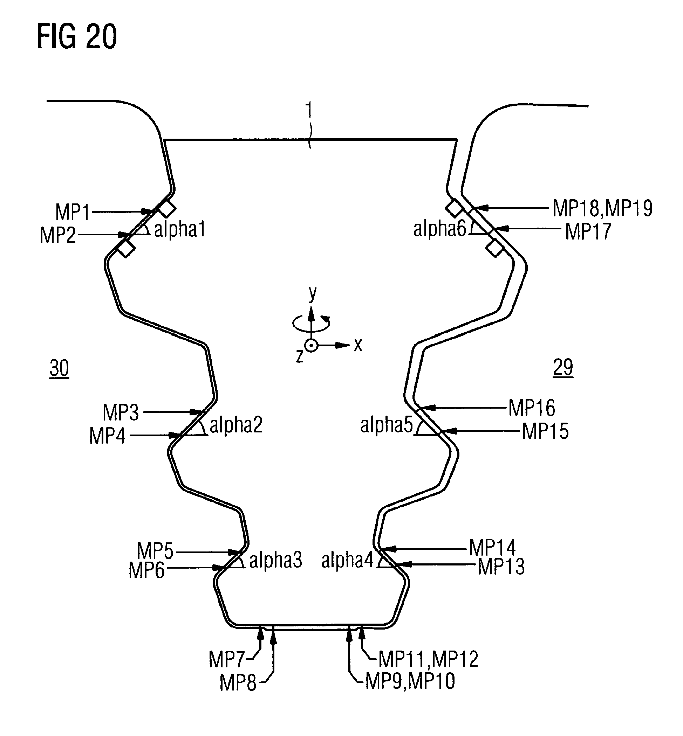

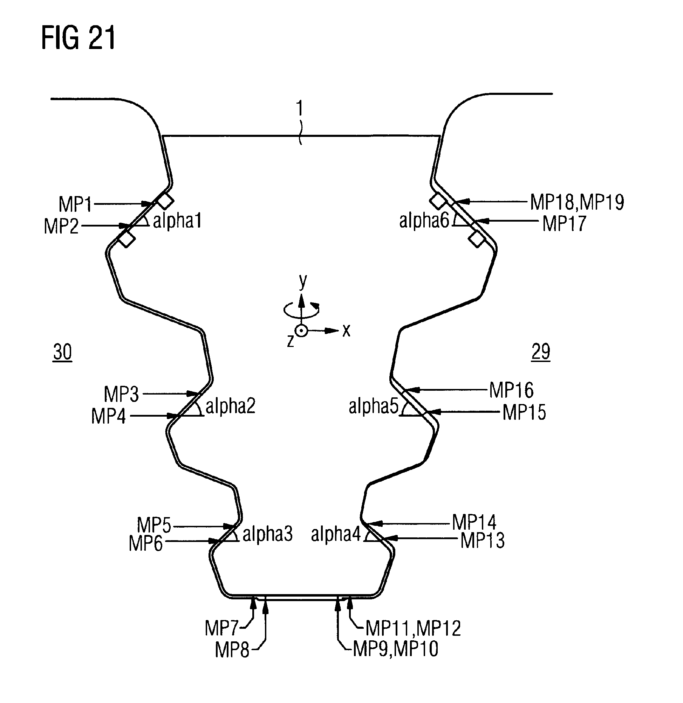

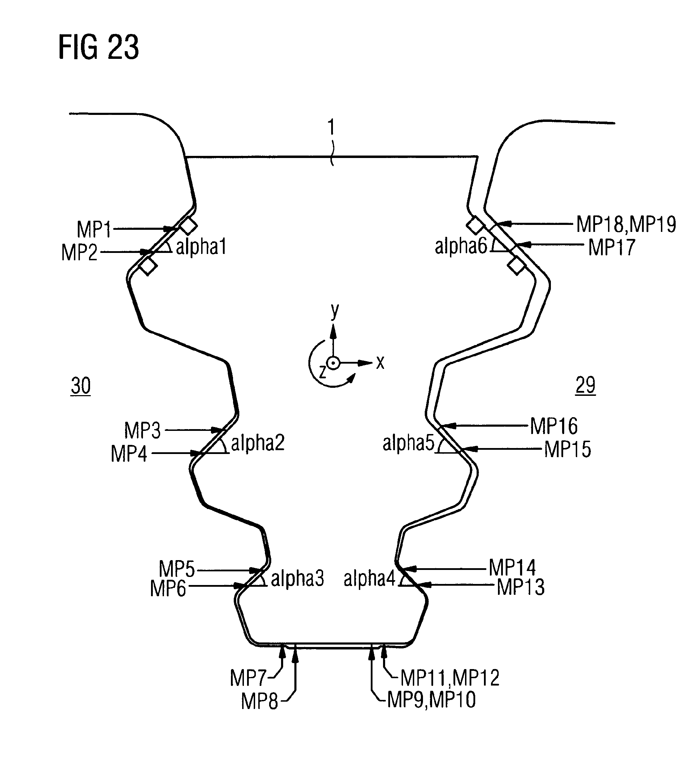

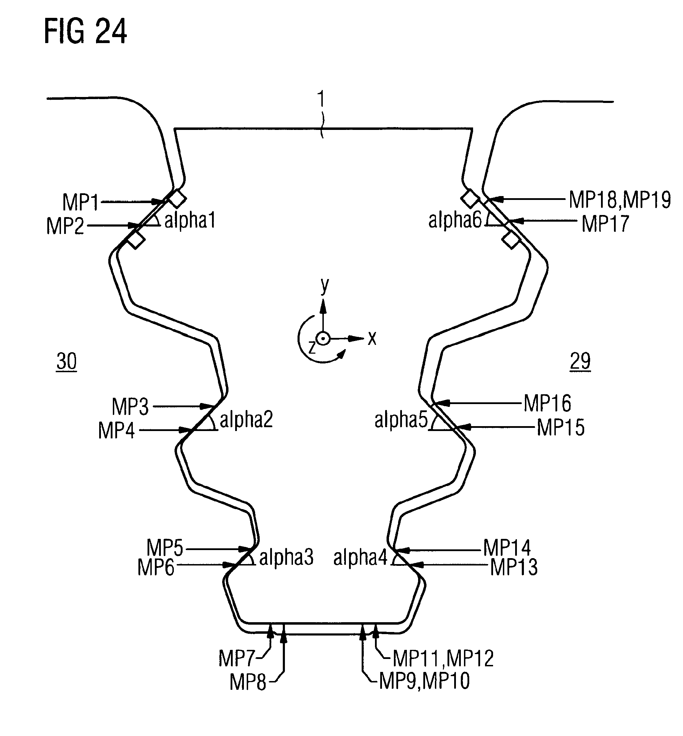

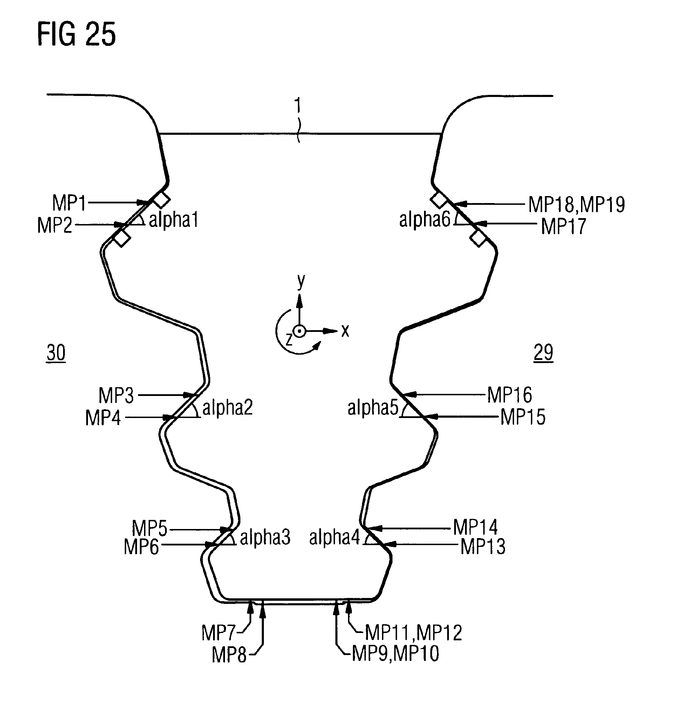

Nachstehend wird nun anhand der Fig. 10-25 ein Prüf-, Auswertungs- und Kompensationsschema beschrieben, welches ermöglicht, die Abweichungen der Abstandswerte in den Messpunkten MP1 bis MP19 bestimmten Fehlerursachen zuzuordnen. Das Schema lässt sich in tabellarischer Form darstellen, ist so vorab gespeichert und wird in der Auswerteelektronik verwendet, um bei Abweichungen von der Sollkontur Fehlerquellen zu identifizieren, zu quantifizieren, und Fehlstellungen des Prüfkörpers zu kompensieren. Ein solches Auswertungsschema ist nachstehend in zwei Tabellen 2A und 2B wiedergegeben und wird dann im Zusammenhang mit den zugehörigen Figuren erläutert.

**Tabelle 2A**

| Messfehler | Fertigungsfehler | |
|---|---|---|
| | Größere | Einseitige |
| | Nutbreite: | Fräserabdrängung: |
| | | |
| | MP 7-12 gleichmäßig + | MP 9-19 + |
| | | α 4-6 gleichmäßig + |
| | | |
| | (Fig. 10) | (Fig. 11) |
| | | |
| | Ebene 1: MP 1-9,11,13-18 + | Ebene 1: MP 1-9,11,13-18 + |
| | Ebene 2: MP 10,12,19 ++ | Ebene 2: MP 10,12,19 ++ |
| | | α 4-6 + |
| | | |
| Drehung um | Kompensation durch | Kompensation durch |
| +X | MP 10,12,19 | MP 10,12,19 |
| | | |
| (Fig. 9) | MP 11,7 != MP 12 | MP 11,7 != MP 12 |
| | MP 9,8 != MP 10 | MP 9,8 != MP 10 |
| | MP 1,18 != MP 19 | MP 1,18 != MP 19 |
| | | |
| | (Fig. 14) | (Fig. 15) |
| | | |
| | MP 1-6 + | MP 1-6 + |
| | MP 13-18 + | MP 13-18 + |
| Drehung um | MP 19 ++ | MP 19 ++ |
| +Y | | α 4-6 + |
| | | |
| (Fig. 8) | Kompensation durch MP 19 | Kompensation durch MP 19 |
| | | |
| | (Fig. 18) | (Fig. 19) |
| | | |
| Drehung um | | |
| +Z | MP 7,8,13,14,15,16 - | MP 13-19 - |
| | MP 9-11,1-6,17-19 + | MP 1-6 + |
| (Fig. 6) | α 1-3 + | α 1-3 + |
| | α 4-6 + | α 4-6 ++ |
| | | |
| | Mathematische Kompensation | Mathematische Kompensation |
| | | |
| | (Fig. 22) | (Fig. 23) |

**Tabelle 2B**

| Messfehler | Fertigungsfehler | |
|---|---|---|
| | | |
| | Beidseitige | Höhenversatz |
| | Fräserabdrängung: | zwischen Flanken: |
| | | |
| | MP 1,2,17-19 + | MP 13-19 gleichmäßig + |
| | MP 3,4,15,16 + | |
| | MP 5,6,13,14 - | |
| | α 1-6 gleichmäßig + | |
| | | |
| | (Fig. 12) | (Fig. 13) |
| | | |
| | | |
| | Ebene 1: MP 1-9,11,13-18 + | Ebene 1: MP 1-9,11,13-18 + |
| | Ebene 2: MP 10,12,19 ++ | Ebene 2: MP 10,12,19 ++ |
| | | |
| | Kompensation durch | Kompensation durch |
| Drehung um | MP 10,12,19 | MP 10,12,19 |
| +X | | |
| | | |
| 9) | MP 11,7 != MP 12 | MP 11,7 != MP 12 |
| (Fig. | MP 9,8 != MP 10 | MP 9,8 != MP 10 |
| | MP 1,18 != MP 19 | MP 1,18 != MP 19 |
| | | |
| | (Fig. 16) | (Fig. 17) |
| | | |
| | MP 1-6 + | MP 1-6 + |
| | MP 13-18 + | MP 13-18 + |
| Drehung um | MP 19 ++ | MP 19 ++ |
| +Y | | |
| | | |
| (Fig. 8) | Kompensation durch MP 19 | Kompensation durch MP 19 |
| | | |
| | (Fig. 20) | (Fig. 21) |
| | | |
| Drehung um | | |
| +Z | MP 4,5,6,13 - | MP 13-19 - |
| | MP 1,2,3,14-19 + | MP 1-6 + |
| (Fig. 6) | | |
| | Mathematische Kompensation | Mathematische Kompensation |
| | | |
| | (Fig. 24) | (Fig. 25) |

Die Drehungen des Messkörpers um die X-, Y-, und Z-Achse sind Lageabweichungen im Sinne der Erfindung, die in den Fig. 6, 8 und 9 graphisch dargestellt sind.

Anhand der Fig. 10-13 wird nun zunächst die Identifizierung bestimmter Fertigungsfehler diskutiert. Obschon in diesen schematischen, stirnseitigen Ansichten die Messpunkte MP der Messebenen überlagert dargestellt sind, ist darauf hinzuweisen, dass die Messpunkte MP10, MP12 und MP19 in der Sekundärmessebene angeordnet sind, während die restlichen Messpunkte in der Hauptmessebene angeordnet sind.

Für die Auswertung werden die Abstandswerte für die Messpunkte MP1 bis MP19 sowie die Tragflankenwinkel α1 bis α6 verwendet. Dabei ist α1 der Neigungswinkel zwischen den Messpunkten MP1 und MP2, ist α2 der Neigungswinkel zwischen den Messpunkten MP3 und MP4, ist α3 der Neigungswinkel zwischen den Messpunkten MP5 und MP6, ist α4 der Neigungswinkel zwischen den Messpunkten MP13 und MP14, ist α5 der Neigungswinkel zwischen den Messpunkten MP15 und MP16, und ist α6 der Neigungswinkel zwischen den Messpunkten MP17 und MP18.

Fig. 10 zeigt die Lage des Prüfkörpers 1 in einem zu prüfenden Nutquerschnitt in einem Fall, in dem die Nut eine größere Breite aufweist als gefordert. In diesem Fall wird der Prüfkörper 1 durch die Wirkung des Pneumatikzylinders 15 weiter nach oben bewegt, bis sich die oberen Messflächen 5a bzw. die darin gelagerten Stege 8 an die oberen Anlageflächen anlegen.

Für kleine Abweichungen sind daher die Abstandswerte für Sensoren auf der Unterseite des Prüfkörpers 1, d.h., für die Messpunkte MP7 bis MP12 gleichmäßig erhöht. Aus einer gleichmäßigen Erhöhung dieser Abstandswerte kann also auf eine vergrößerte Nutbreite geschlossen werden. Analog kann aus einem gleichmäßig zu kleinen Wert für die Abstandswerte der Messpunkte MP7 bis MP12 auf eine verringerte Nutbreite geschlossen werden.

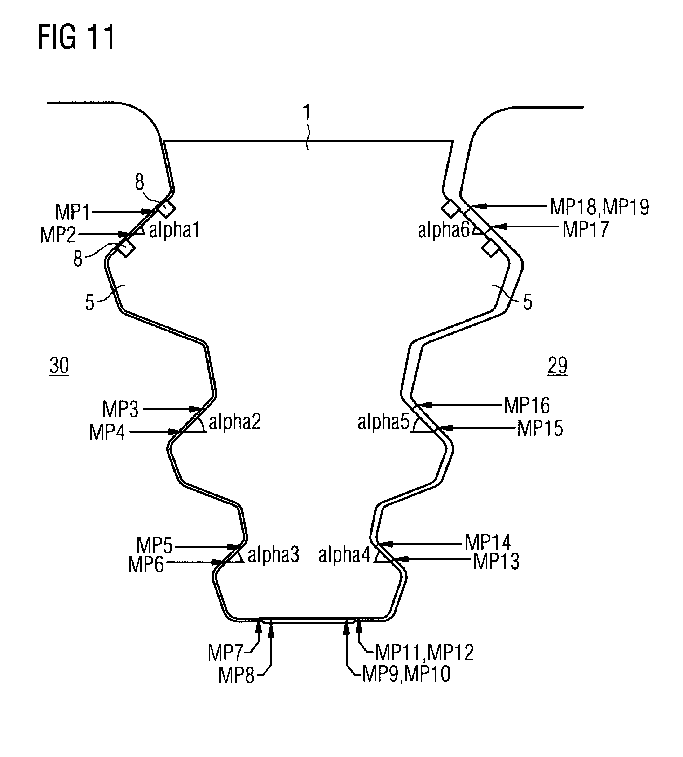

Fig. 11 zeigt die Lage des Prüfkörpers 1 in einem zu prüfenden Nutquerschnitt in einem Fall einer einseitigen Fräserabdrängung. Eine solche Abdrängung führt auf der Seite, auf welcher sie vorliegt, zu einer Schiefstellung des Fräsers. In einem solchen Fall wird sich der Prüfkörper 1 auf der betreffenden Seite nicht an der oberen Anlagefläche der betreffenden Seite, sondern nur auf der gegenüberliegenden Seite anlegen, und die Abstandswerte werden sich auf der betreffenden Seite nach oben hin vergrößern. Im dargestellten Fall sind die Abstandswerte für die Messpunkte auf betreffender Seite, hier der Messpunkte MP9 bis MP19, mit größer werdendem Abstand vom Nutgrund in wachsendem Ausmaß erhöht. Die Tragschulterwinkel auf dieser Seite α4 bis α6 sind dagegen gleichmäßig erhöht. Bei Abdrängung auf der anderen Nutflanke tritt das oben erläuterte Phänomen für die Messpunkte MP8 bis MP1 (in der Reihenfolge zunehmend erhöhter Abstandswerte) und die Winkel α1 bis α3 auf.

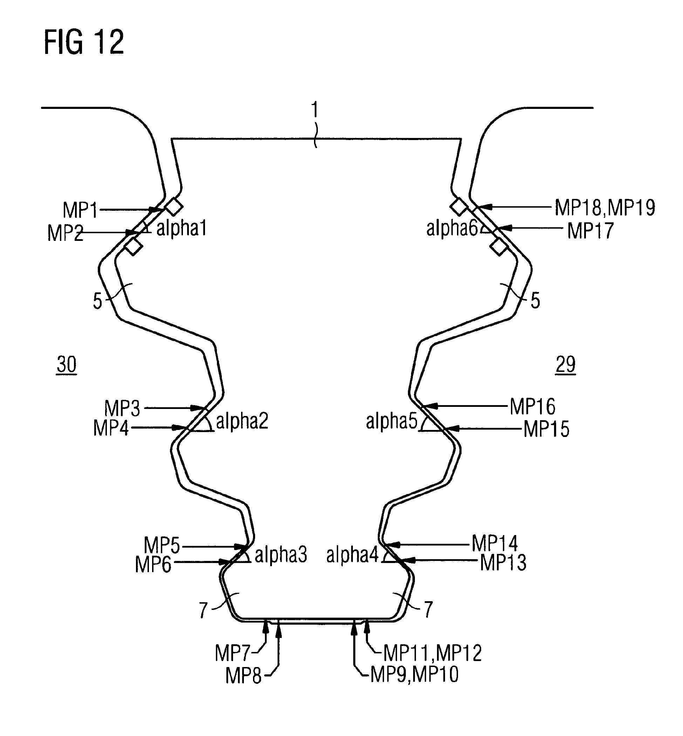

Fig. 12 zeigt die Lage des Prüfkörpers 1 in einem zu prüfenden Nutquerschnitt in einem Fall einer beidseitigen Fräserabdrängung. Bei einer solchen Abdrängung kann sich der Prüfkörper überhaupt nicht an den oberen Anlageflächen anlegen, sondern wird sich an den unteren Anlageflächen anlegen. Die Abstandswerte der Sensoren auf den Messflächen 7a der unteren Vorsprünge 7, also der Messpunkte MP5, MP6, MP13 und MP14 werden daher kleiner sein als erwartet. Für die Abstandswerte in den oberen und mittleren Messflächen 6a, 5a sowie für alle Winkelwerte gilt das für die einseitige Fräserabdrängung Gesagte. D.h., die Abstandswerte für die Messpunkte MP15 bis MP19 und die Messpunkte MP4 bis MP1 werden mit größer werdendem Abstand vom Nutgrund in wachsendem Ausmaß erhöht sein, und alle Winkelwerte α1 bis α6 werden erhöht sein.

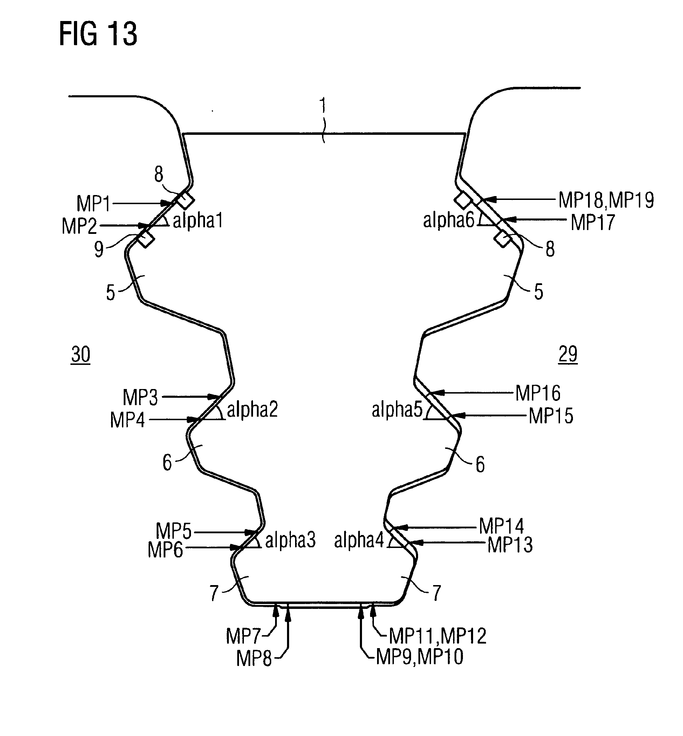

Fig. 13 zeigt die Lage des Prüfkörpers 1 in einem zu prüfenden Nutquerschnitt in einem Fall einer Höhenversatzes zwischen Flanken. In diesem Fall ist der Abstand der Anlageflächen der Nut auf der höher ausgefrästen Seite zu den Messflächen 5a, 6a, 7a der Vorsprünge 5, 6, 7 um gleichmäßig größer als erwartet, während auf der niedrigen Seite die Stege 8, 9 an der oberen Anlagefläche zu liegen kommen. D.h., die Abstandswerte der Messpunkte auf der höheren Seite, im dargestellten Fall der Punkte MP13 bis MP19, werden gleichmäßig erhöht sein, während die Winkel auf beiden Seiten gleich bleiben.

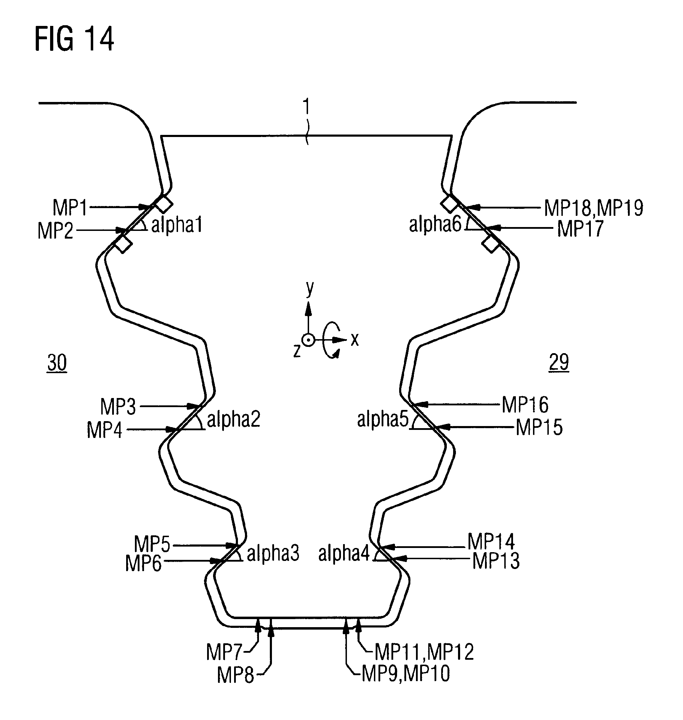

Den vorstehend beschriebenen Fertigungsfehlern überlagern sich Fehlstellungen des Prüfkörpers 1, wie sie in den Fig. 6, 8 und 9 dargestellt sind. Anhand der Fig. 14 bis 25 werden diese Überlagerungen und mögliche Kompensationen erläutert.

Eine Kippung des Prüfkörpers 1 in Längsrichtung der Nut gemäß der Darstellung in Fig. 6, d.h., eine Verdrehung (Fehlstellung) um die X-Achse (Querachse der Nut) in Fig. 10-13, ist in Fig. 14-17 gezeigt.

Sie wird sich durch eine Verschiebung des Auflagepunkts der Stege 8 auf der konkaven und/oder konvexen Seite, je nachdem, welcher Auflagepunkt sich aufgrund der tatsächlichen Form der Nut bei angenommener Richtigstellung des Profilkörpers 1 einstellen würde, bemerkbar machen. Es würden sich daher die Abstandswerte aller Sensoren vergrößern, und zwar je nachdem, ob die Fehlstellung in positiver oder negativer Drehrichtung vorliegt, die Werte der Sensoren in der Hauptmessebene weniger oder mehr als die Werte der Sensoren in der Sekundärmessebene.

Mit dieser Erkenntnis kann die Verdrehung (Fehlstellung) um die X-Achse durch die Sensoren in den Messpunkten MP10, MP12 und MP19 kompensiert werden, indem die Messpunkte MP11 und MP7 in Übereinstimmung mit dem Messpunkt MP12 gebracht werden, die Messpunkte MP9 und MP8 in Übereinstimmung mit dem Messpunkt MP10 gebracht werden, und die Messpunkte MP1 und MP18 in Übereinstimmung mit dem Messpunkt MP19 gebracht werden.

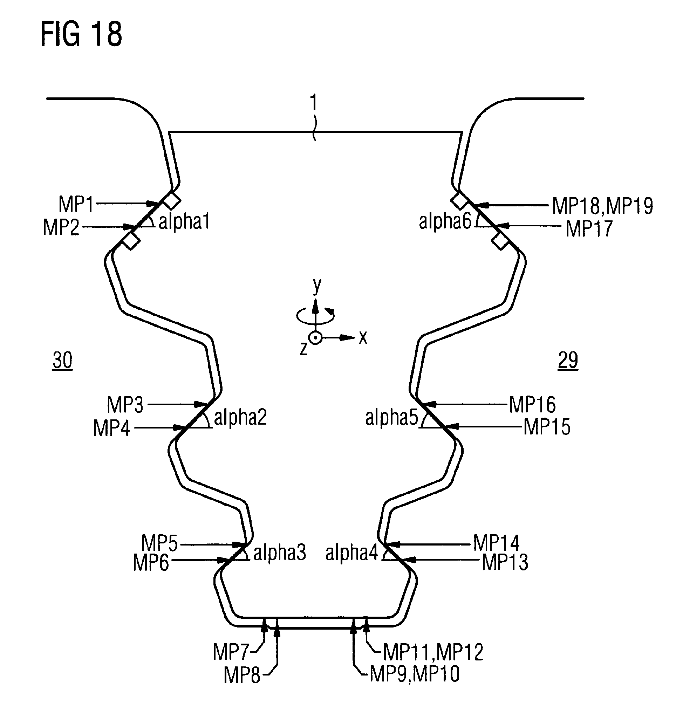

Eine Verdrehung des Prüfkörpers 1 um seine Höhenachse gemäß der Darstellung in Fig. 8, d.h., eine Verdrehung (Fehlstellung) um die Y-Achse in Fig. 10-13, ist in Fig. 18-21 dargestellt. Sie wird die Abstandswerte der Sensoren in der Bodenfläche, also an den Messpunkten MP7 bis MP12 unverändert lassen. Die Abstandswerte an den Flanken werden sich jedoch vergrößern, und zwar je nachdem, ob die Fehlstellung in positiver oder negativer Drehrichtung vorliegt, bei den Sensoren der Hauptmessebene MP1 bis MP6 und MP13 bis MP18 weniger oder mehr als bei dem Sensor MP19 in der Sekundärmessebene.

Mit dieser Erkenntnis kann die Verdrehung (Fehlstellung) um die Y-Achse durch den Sensor in dem Messpunkt MP19 kompensiert werden.

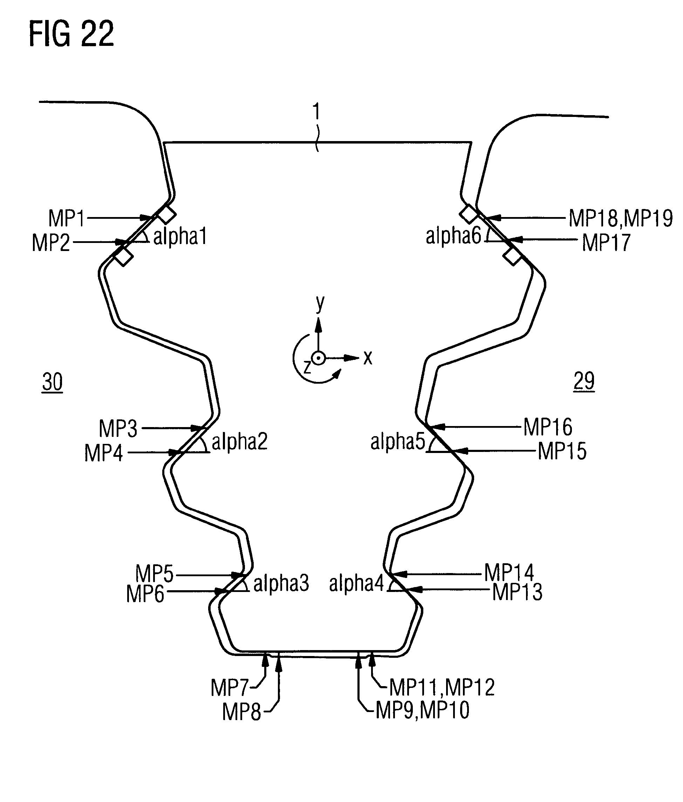

Eine seitliche Kippung des Prüfkörpers 1 gemäß der Darstellung in Fig. 9, d.h., eine Verdrehung (Fehlstellung) um die Z-Achse (Längsachse der Nut) in Fig. 10-13, ist in Fig. 22-25 dargestellt.

Es handelt sich dabei um eine ebene Verdrehung der Profilquerschnitte der Nut und des Prüfkörpers 1 zueinander. Die Verschiebung der Messpunkte und ihre Annäherung oder Entfernung an die Nutflächen bzw. von diesen weg hängt von der geometrischen Situation, insbesondere der Winkellage in der X-Y-Ebene und dem Neigungswinkel der jeweiligen Fläche ab. Im dargestellten Fall werden sich bei Fehlstellung in positiver Drehrichtung die Messpunkte MP1 bis MP6 von den jeweiligen Anlageflächen entfernen, werden sich die Messpunkte MP7 und MP8 an den Nutgrund annähern, werden sich die Messpunkte MP9 bis MP12 von dem Nutgrund entfernen, werden sich die Messpunkte MP13 bis MP16 den jeweiligen Anlageflächen nähern und werden sich die Messpunkte MP17 bis MP19 von der oberen Anlagefläche entfernen. In jedem Fall werden sich die Tragschulterwinkel α1 bis α3 verkleinern und werden sich die Tragschulterwinkel α4 bis α6 vergrößern. Die Überlagerung mit den verschiedenen Fertigungsfehlern ergibt komplexe Mischungen von Messpunktverschiebungen.

Mit dieser Erkenntnis kann die Fehlstellung um die z-Achse mathematisch kompensiert werden.

Das vorstehend beschriebene Verfahren geht bei der Berechnung der Lageabweichungen des Prüfkörpers von der Annahme aus, dass die Nutgeometrie über die Länge des Prüfkörpers (genauer: zwischen der Haupt- und der Sekundärmessebene) im Wesentlichen konstant ist.

Die Anordnung der Nuten 13, 14 mit darin eingesetzten Stegen 8, 9 ist rein beispielhaft. In Abwandlungen können mehr oder weniger Stege verwendet werden. Es können sich auch Stege quer zur Profillängsrichtung erstrecken, je nachdem, wie es für einen sicheren Sitz in der Nut vorteilhaft ist. Besonders bevorzugt sind drei speziell geformte Stege, wobei z.B. auf der konkaven Seite der Nut ein Längssteg angeordnet ist und auf der konvexen Seite der Nut zwei Querstege angeordnet sind. Auch andere Anordnungen sind denkbar. Speziell bei drei Stegen kann durch einen speziellen Anschliff der Stege ein stabiler Sitz der Prüfvorrichtung über drei Anlagepunkte (und den Stempel 21 am Nutgrund als vierten Anlagepunkt) erreicht werden.

Die Anordnung der Abstandssensoren kann je nach Bedarf verändert werden.

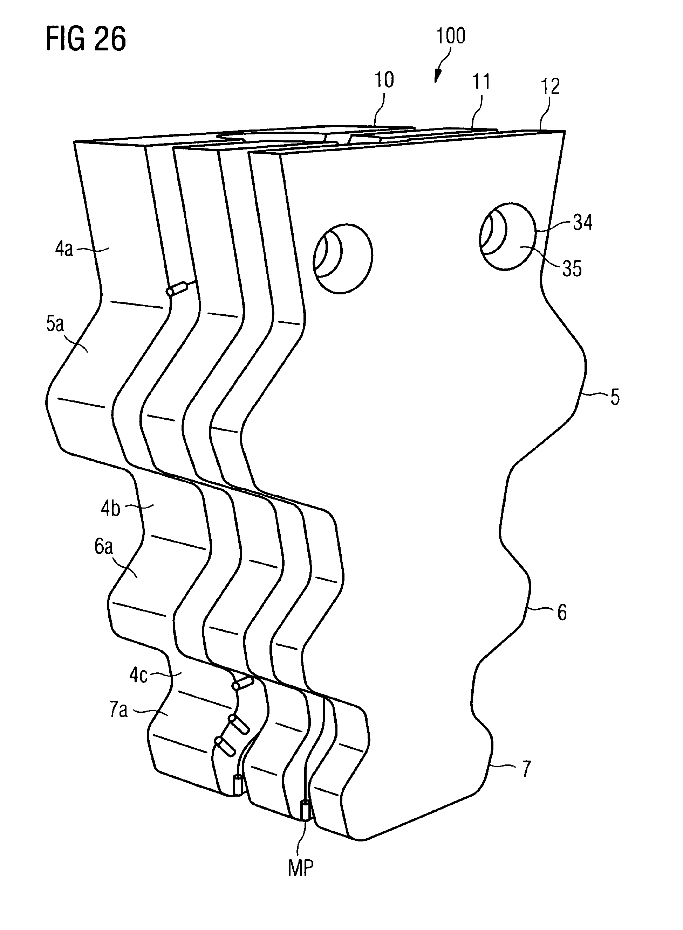

In Fig. 26 bis 28 ist ein Prüfkörper 100 als zweites Ausführungsbeispiel im Rahmen der Erfindung gezeigt. Die für das erste Ausführungsbeispiel gezeigten und beschriebenen Verfahrensweisen und Überlegungen sind, soweit sich aus nachstehender Beschreibung nichts anderes ergibt, auf dieses zweite Ausführungsbeispiel anwendbar.

Der Prüfkörper 100 dieses Ausführungsbeispiels ist gemäß der Explosionsansicht in Fig. 26 in seiner Grundform wie der Prüfkörper 1 des ersten Ausführungsbeispiels mit symmetrischtrapezförmigem Grundquerschnitt, von welchem die seitlichen Vorsprünge 5, 6, 7 abragen, aufgebaut und ebenfalls aus Hauptstück 10, Mittelstück 11 und Endstück 12, die jeweils die gleiche prismatische Kontur aufweisen und in Profilrichtung aneinanderliegen. Für die in der Mittelachse liegende Bohrung und die Abdrückeinrichtung ist auf die vorstehende Beschreibung des ersten Ausführungsbeispiels zu verweisen.

Für die Zwecke der nachstehenden Beschreibung werden hier die trapezförmigen Flanken des Prüfkörpers in eine obere Flanke 4a, eine mittlere Flanke 4b und eine untere Flanke 4c unterschieden.

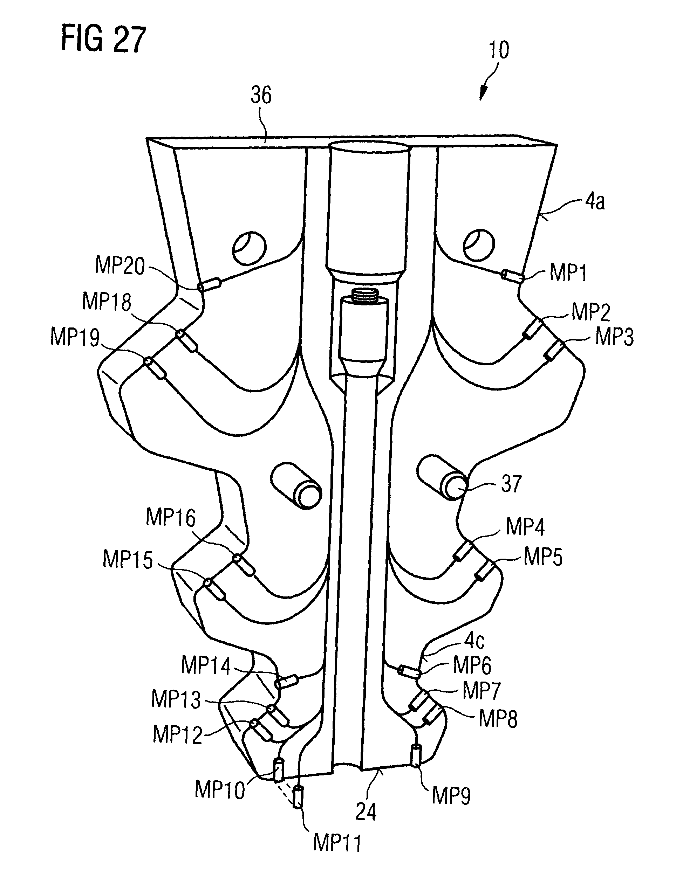

In Fig. 26 sind in dem Endstück 12 zwei sich in Profillängsrichtung erstreckende Bohrungen 34 mit jeweiliger Ansenkung 35 zu erkennen. Obschon in der Figur nicht erkennbar, fluchten diese Bohrungen mit entsprechenden Bohrungen in dem Mittelstück 11 und Gewindebohrungen 36 (s. Fig. 27) in dem Hauptstück 10. Diese Bohrungsanordnung dient der Aufnahme von Befestigungselementen wie etwa Schrauben, die von der Stirnseite des Endstücks 12 aus eingeführt und in der Gewindebohrung 36 verschraubt werden. (In einer nicht lösbaren Abwandlung ist anstelle der Gewindebohrung 36 eine einfache Bohrung, gegebenenfalls mit einer Gegensenkung auf der Rückseite, vorgesehen, und werden Niete zur unlösbaren Verbindung der Stücke 10, 11, 12 verwendet.) Eine Zentrierung der Stücke 10, 11, 12 erfolgt über Stifte 37 (vgl. Fig. 27), die sich durch das Mittelstück 11 hindurch erstrecken und in Sackbohrungen (nicht näher dargestellt) in dem Hauptstück 10 und dem Endstück 12 sitzen. Anstelle einer Verschraubung oder dergleichen ist es auch denkbar, die Bauteile z.B. mittels eines PU-Klebers oder dergleichen zu verbinden.

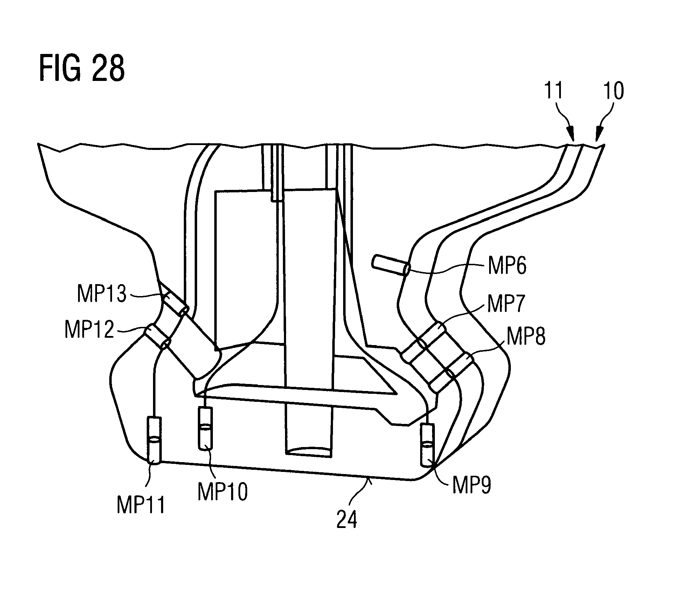

Fig. 28 zeigt den Bereich der Bodenfläche 24 in vergrößerter Darstellung.

Der Wesentliche Unterschied zwischen dem Prüfkörper 100 und dem Prüfkörper 1 liegt in der Anordnung der Abstandssensoren bzw. Messpunkte (vgl. Fig. 8 und 9). (Wegen der unterschiedlichen Anordnung verschiebt sich auch die Zählung der Messpunkte.)

Die Staffelung (Doppelbesetzung) der Abstandssensoren in der Bodenfläche 24 entfällt. Somit sind in der Bodenfläche 24 in der Primär-Messebene nur zwei Abstandssensoren (links und rechts jeweils einer) in den Messpunkten MP9 und MP10 und in der Sekundär-Messebene nur ein Abstandssensor in dem Messpunkt MP11 vorhanden. Es entfallen hier also drei Messpunkte. Die verbleibenden Messpunkte liegen im äußeren Bereich, um über einen möglichst großen Abstand eine gute Winkelauflösung zu erhalten. Die o. g. Anordnung bietet sich z.B. bei weiten Messbereichen an, während bei engerem Messbereich in den jeweiligen Teilbereichen der Bodenfläche 24 zwei Abstandssensoren (wie im ersten Ausführungsbeispiel) erforderlich sein können.

Ferner sind in der oberen Flankenfläche 4a und der unteren Flankenfläche 4c links und rechts jeweils ein weiterer Abstandssensor, mithin vier weitere Messpunkte MP1, MP6, MP14, MP20 vorgesehen (es wird nochmals darauf hingewiesen, dass die Zählung nicht mit derjenigen des ersten Ausführungsbeispiels übereinstimmt). Mit diesen zusätzlichen Messpunkten ist auch eine isolierte Ermittlung des Konuswinkels möglich.

Es sind also insgesamt 20 Messpunkte MP1 bis MP20 vorhanden, die sich gemäß nachstehender Tabelle 3 verteilen:

**Tabelle 3**

| | Rechte Seite | | Linke Seite | |
|---|---|---|---|---|
| | Innen | Außen | Innen | Außen |
| Obere | MP1 | | MP20 | |
| Flanke 4a | | | | |
| Obere | MP2 | MP3 | MP18 | MP17 |
| Schulter 5a | | | MP19 (*) | |
| Mittlere | MP4 | MP5 | MP16 | MP15 |
| Schulter 6a | | | | |
| Untere | MP6 | | MP14 | |
| Flanke 4c | | | | |
| Untere | MP7 | MP8 | MP13 | MP12 |
| Schulter 7a | | | | |
| Boden | | MP9 | | MP10 |
| (Grund) 24 | | | | MP11 (*) |

| | | | | |
|---|---|---|---|---|
| (*) in Sekundär-Messebene | | | | |

Das Auswertungsverfahren ist an die Verteilung der Messpunkte MP1 bis MP20 angepasst. Durch das Messen der Abstände auf den Flanken 4 kann der Konuswinkel und damit die bei einem seriellen Fräsen der Nutflanken auftretende seitliche Abdrängung des Fräsers, unabhängig von anderen Einflüssen wie z.B. Fehler am Tragflankenwinkel, ermittelt werden. Ist der tatsächliche Konuswinkel am Profilfräswerkzeug bekannt, können die geometrischen Abweichungen, die sich aus der seitlichen Fräserabdrängung und einem Fehler am Tragflankenwinkel ergeben, differenziert werden. Dadurch, dass diese beiden Störgrößen jeweils unabhängig voneinander quantifizierbar sind, kann die Nutbreite für jede erforderliche Bezugsebene unabhängig von etwaigen Winkelfehlern bestimmt werden. Die verringerte Anzahl von Messpunkten am Nutgrund kann durch eine Messbereichserweiterung der Auswerteeinheit ausgeglichen werden. Die vorstehenden Auswertetabellen 2A und 2B wären anhand der vorstehenden Überlegungen an dieses Ausführungsbeispiel anzupassen.

Es versteht sich, dass je nach Anforderungen und Messmöglichkeiten auch andere Anordnungen der Messpunkte möglich sind, die jedoch vom grundlegenden Gedanken der Erfindung abgedeckt sind.

Der Prüfkörper 1 ist auch ohne verfahrbare Halterung einsetzbar. Und zwar kann der Prüfkörper 1 auch manuell in die zu prüfende Nut eingeführt und an den gewünschten Prüfquerschnitt bewegt werden, kann dann der Pneumatikzylinder aktiviert werden und die Messung ausgelöst werden.

Je nach erforderlichem Abstand der Sekundärmessebene von der Hauptmessebene kann der Prüfkörper auch Messpunkte in weiteren Messebenen zusätzlich zu der Hauptmessebene und der Sekundärmessebene aufweisen. Hierzu kann der Prüfkörper 1 mehr als drei Teilkörper aufweisen.

Es versteht sich, dass die vorgeschlagene Prüfvorrichtung für andere Nutformen lediglich einer Änderung der Querschnittsgeometrie bedarf.

## Patentansprüche

1. Verfahren zum Prüfen der Fertigungsgenauigkeit von Profilnuten (25) mit wenigstens einem Paar von Anlageflächen, unter Verwendung eines Prüfkörpers (1) mit mehreren Messflächen (5a, 6a, 7a), dessen Querschnittsform der Geometrie der zu prüfenden Nut (25) derart angepasst ist, dass die Messflächen (5a, 6a, 7a) des Prüfkörpers (1) wenigstens jeweils einer Anlagefläche der Nut (25) sowie dem Nutgrund gegenüberliegen,
wobei in den Messflächen (5a, 6a, 7a) des Prüfkörpers (1) eine Mehrzahl von insbesondere faseroptischen Abstandssensoren (16, 17) in wenigstens zwei zur Querschnittsebene des Prüfkörpers (1) parallelen Messebenen derart angeordnet sind, dass in einer ersten Messebene in jeder einer Anlagefläche oder dem Nutgrund gegenüberliegenden Messfläche wenigstens zwei Abstandssensoren (16, 17) vorgesehen sind und in einer zweiten Messebene in der dem Nutgrund gegenüberliegenden Messfläche und in einer weiteren Messfläche jeweils wenigstens ein Abstandssensor (16, 17) in Profillängsrichtung auf einer Linie mit jeweils einem der Abstandssensoren (16, 17) in der ersten Messebene vorgesehen sind, mit den Schritten:
Positionieren des Prüfkörpers (1) in der Nut (25);
Anlegen des Prüfkörpers (1) an wenigstens einer der Anlagenflächen der Nut (25) und Fixieren des Prüfkörpers (1) in der Nut (25) durch Aufrechterhalten einer vorbestimmten Anpresskraft;
Aktivieren der Abstandssensoren (16, 17) und Empfangen von Signalen von diesen;
Erfassen eines Abstandswerts für jeden Abstandssensor (16, 17) auf der Grundlage der Sensorsignale;
Berechnen eines Abstandsabweichungswerts für jeden Abstandssensor (16, 17) gegenüber einem vorab gespeicherten Referenzquerschnitt der Nut (25);
Berechnen von Lageabweichungen des Prüfkörpers (1) gegenüber der Nut (25) auf der Grundlage der Abstandsabweichungswerte für die Abstandssensoren (16, 17) in der ersten und zweiten Messebene unter der Annahme, dass sich die Nutgeometrie zwischen der ersten und der zweiten Nutebene im Wesentlichen nicht ändert;
Berechnen von korrigierten Abstandsabweichungswerten für die Abstandssensoren (16, 17) der ersten Messebene durch Kompensieren der berechneten Lageabweichungen; und
Berechnen einer Ist-Geometrie der Nut (25) auf der Grundlage der kompensierten Abstandsabweichungswerte für die Abstandssensoren der ersten Messebene.

2. Verfahren nach Anspruch 1, **dadurch gekennzeichnet, dass** in der zweiten Messebene in der dem Nutgrund gegenüberliegenden Messfläche wenigstens zwei Abstandssensoren angeordnet sind.

3. Verfahren nach Anspruch 1, **dadurch gekennzeichnet, dass** auch Messflächen vorgesehen sind, die jeweils einem Konusabschnitt, insbesondere einem oberen und einem unteren Konusabschnitt der Nut gegenüberliegen, wobei in jeder einem Konusabschnitt der Nut gegenüberliegenden Messfläche wenigstens ein Abstandssensor vorgesehen ist, wobei vorzugsweise in der zweiten Messebene in der dem Nutgrund gegenüberliegenden Messfläche genau ein Abstandssensor angeordnet ist.

4. Verfahren nach einem der Ansprüche 1 bis 3,
weiter **gekennzeichnet durch** die Schritte:
Berechnen linear unabhängiger Kennwerte auf der Grundlage der Abstands- bzw. Abstandsabweichungswerte; und
Identifizieren von Fehlerursachen aus vorgegebenen Typen von Fertigungsfehlern **durch** Vergleichen der Kennwerte mit einer vorab gespeicherten Tabelle.

5. Verfahren nach Anspruch 4,
weiter **gekennzeichnet**
**durch** einen Schritt eines Quantifizierens der Fehlerursache oder der Fehlerursachen.

6. Verfahren nach Anspruch 5,
weiter **gekennzeichnet**
**durch** einen Schritt einer Plausibilitätsprüfung der identifizierten Fehlerursachen.

7. Verfahren nach einem der vorstehenden Ansprüche,
**dadurch gekennzeichnet,**
**dass** eine berechnete Fehlstellung des Prüfkörpers(1) nur dann kompensiert wird, wenn sie einen vorgegebenen Schwellenwert überschreitet.

8. Verfahren nach einem der Ansprüche 5 bis 7,
weiter **gekennzeichnet**
**durch** einen Schritt eines Ausgebens einer Information über die identifizierten Fehlerursachen, vorzugsweise in quantifizierter Form.

9. Verfahren nach einem der Ansprüche 5 bis 8,
weiter **gekennzeichnet**
**durch** einen Schritt eines Ausgebens einer Warnmeldung, wenn eine identifizierte Fehlerursache oder eine berechnete Fehlstellung einen jeweils vorbestimmten, vorzugsweise frei wählbaren Grenzwert überschreitet.

10. Verfahren nach einem der vorstehenden Ansprüche, weiter **gekennzeichnet**
**durch** einen Schritt eines Wiederholens der Verfahrensschritte für eine Mehrzahl von Einzelquerschnitten der Nut (25).

11. Verfahren nach Anspruch 10,
weiter **gekennzeichnet**
**durch** einen Schritt eines Korrelierens der Daten zwischen einzelnen Prüfschnitten innerhalb einer Nut (25).

12. Verfahren nach Anspruch 10 oder 11,
weiter **gekennzeichnet**
**durch** einen Schritt eines Auswertens von Ausgangssignalen von Winkel- und Weggebern, die im Zusammenhang mit einer Halterung für den Prüfkörper stehen, um einzelne Messungen innerhalb einer Nut (25) anhand von Ausgabewerten der Winkel- und Weggeber in geometrischen Bezug zueinander zu bringen.

13. Verfahren nach einem der Ansprüche 10 bis 12,
weiter **gekennzeichnet**
**durch** einen Schritt eines Transformierens der Messergebnisse der einzelnen Prüfschnitte innerhalb einer Nut (25) in ein mathematisches, dreidimensionales Modell der Nut (25).

14. Verfahren nach Anspruch13,
weiter **gekennzeichnet**
**durch** einen Schritt eines Erzeugens eines Prüfprotokolls auf der Grundlage eines Vergleichs des erzeugten Modells mit einer Nominalnut.

15. Prüfapparatur zum Prüfen von Profilnuten mit wenigstens einem Paar von Anlageflächen, aufweisend:
einen Prüfkörpers (1) mit mehreren Messflächen, dessen Querschnittsform der Geometrie der zu prüfenden Nut derart angepasst ist, dass die Messflächen des Prüfkörpers (1) wenigstens jeweils einer Anlagefläche der Nut (25) sowie dem Nutgrund gegenüberliegen,
wobei in den Messflächen des Prüfkörpers eine Mehrzahl von insbesondere faseroptischen Abstandssensoren (16, 17) in wenigstens zwei zur Querschnittsebene des Prüfkörpers (1) parallelen Messebenen derart angeordnet sind, dass in einer ersten Messebene in jeder einer Anlagefläche oder dem Nutgrund gegenüberliegenden Messfläche wenigstens zwei Abstandssensoren (16, 17) vorgesehen sind und in einer zweiten Messebene in der dem Nutgrund gegenüberliegenden Messfläche und in einer weiteren Messfläche jeweils wenigstens ein Abstandssensor (16, 17) in Profillängsrichtung auf einer Linie mit jeweils einem der Abstandssensoren (16, 17) in der ersten Messebene vorgesehen sind, und
ein Steuergerät, das zur Ausführung der Verfahrensschritte nach einem der vorstehenden Ansprüche eingerichtet ist.

16. Prüfapparatur nach Anspruch 15,
weiter **gekennzeichnet**
**durch** eine Abdrückeinrichtung zum Abdrücken des Prüfkörpers (1) vom Nutgrund.

17. Prüfapparatur nach Anspruch 15 oder 16,
**dadurch gekennzeichnet,**
**dass** die Abdrückeinrichtung einen innerhalb des Prüfkörpers angeordneten Pneumatikzylinder und einen Stempel (21), der mittels der Wirkung des Pneumatikzylinders (15) von der Bodenfläche des Prüfkörpers (1) ausfahrbar ist, aufweist.

18. Prüfapparatur nach einem der Ansprüche 15 bis 17,
**dadurch gekennzeichnet,**
**dass** in den oberen Messflächen jeweils zwei sich in Profillängsrichtung erstreckende Nuten ausgebildet sind, in welchen jeweils ein Einsatz (8, 9) aus einem verschleißfesten Material angeordnet und befestigt ist,
wobei die Einsätze (8, 9) sich geringfügig über die Messflächen erheben und vorzugsweise austauschbar sind.

19. Prüfapparatur nach einem der Ansprüche 15 bis 18, weiter **gekennzeichnet**
**durch** eine Halte- und Verfahrvorrichtung zum Halten und Verfahren des Prüfkörpers (1) in drei Raumrichtungen.

20. Prüfapparatur nach Anspruch 19,
weiter **gekennzeichnet**
**durch** Weggeber, Winkelgeber und Kraftgeber, die mit der Halte- und Verfahrvorrichtung im Zusammenhang stehen.

21. Prüfapparatur nach einem der Ansprüche 15 bis 20,
**dadurch gekennzeichnet,**
**dass** der Prüfkörper (1) aus mehreren Stücken (10, 11, 12) zusammengesetzt ist, die in Profilrichtung hintereinander angeordnet sind und die gleiche Profil-Außenkontur aufweisen, und die Abstandssensoren (16, 17) ,in der Trennebene oder den Trennebenen zwischen den einzelnen Stücken (10, 11, 12) angeordnet sind.
